# FASCICULE DE BREVET EUROPEEN

(11) **EP 4 542 586 B1**
(45) Date de publication et mention de la délivrance du brevet: **13.05.2026**
(21) Numéro de dépôt: 24207421.9
(22) Date de dépôt: 18.10.2024
(51) Int. Cl.: H01C 7/12, H01H 85/44, H01T 1/14, H01T 4/04, H01T 4/06, H02H 3/20, H02H 3/22, H02H 9/04, H02H 9/06, H01H 37/76

(54) **DISPOSITIF DE PROTECTION CONTRE LES SURTENSIONS, AINSI QU INSTALLATION ÉLECTRIQUE COMPORTANT UN TEL DISPOSITIF DE PROTECTION**
ÜBERSPANNUNGSSCHUTZEINRICHTUNG SOWIE ELEKTRISCHE ANLAGE MIT EINER SOLCHEN ÜBERSPANNUNGSSCHUTZEINRICHTUNG
OVERVOLTAGE PROTECTION DEVICE AND ELECTRICAL INSTALLATION COMPRISING SUCH A PROTECTION DEVICE

(30) Priorité: 20.10.2023 FR 2311375
(43) Date de publication de la demande: 23.04.2025
(73) Titulaire: SCHNEIDER ELECTRIC INDUSTRIES SAS, 92500 Rueil-Malmaison (FR)
(72) Inventeur: BADIN, Didier, 38400 SAINT MARTIN D'HÈRES (FR); TIAN, Simon, 38330 SAINT ISMIER (FR); VILA, Stéphane, 38800 LE PONT DE CLAIX (FR)
(74) Mandataire: Lavoix

(56) Documents cités:
- CN-A- 110 379 682
- US-A1- 2023 223 749
- US-B2- 10 734 176

## Description

La présente invention concerne un dispositif de protection contre les surtensions. Elle concerne également une installation électrique comportant un tel dispositif de protection.

Une installation électrique d'un bâtiment comporte habituellement un tableau électrique reliant cette installation à un réseau de distribution d'électricité collectif, ainsi qu'à la terre. Généralement, l'installation électrique comporte également divers dispositifs de protection, de commande et/ou de surveillance de l'installation. Parmi ces divers dispositifs, on connait notamment les dispositifs de protection contre les surtensions, couramment appelés parafoudres ou parasurtenseurs ou encore SPD qui est l'acronyme de l'expression anglaise « Surge Protection Devices ». Ces dispositifs de protection permettent de protéger l'installation électrique contre les surtensions transitoires du courant électrique alimentant cette installation. Ces surtensions ont typiquement pour origine la foudre ou des incidents du réseau de distribution d'électricité. De telles surtensions transitoires sont caractérisées par une élévation transitoire importante de la tension d'alimentation et sont souvent accompagnées d'impulsions de courant de forte intensité.

L'invention s'intéresse plus spécifiquement aux tableaux électriques sur une partie intermédiaire desquels sont disposées, parallèlement et côte à côte, des barres omnibus de phase, qui sont typiquement au nombre de trois et qui sont destinées à être respectivement alimentées par une phase d'une tension électrique polyphasée, typiquement d'une tension triphasée. Ces barres omnibus, couramment appelées « busbar » selon la terminologie en anglais dans le domaine, forment ainsi un groupe. De tels tableaux électriques sont courants dans de nombreux pays anglo-saxons, notamment au Royaume-Uni, où les barres omnibus de phase s'étendent en longueur généralement à la verticale, au centre du tableau électrique. Pour permettre de supporter des appareillages électriques à raccorder aux barres omnibus de phase, le tableau électrique est très souvent pourvu de deux rails, tels que des rails DIN, qui s'étendent chacun en longueur parallèlement aux barres omnibus de phase et qui sont disposés le long et de part et d'autre du groupe que forment les barres omnibus de phase. Des appareillages électriques, tels que certains dispositifs de protection, de commande et/ou de surveillance, peuvent alors être montés sur les rails, en étant chacun agencés perpendiculairement au groupe des barres omnibus de phase auxquelles ces appareillages sont connectés directement. Cet agencement du tableau électrique fait que ce dernier est souvent qualifié de type « fishbone ». Le tableau électrique est, le cas échéant, complété par deux barres omnibus de neutre, qui sont destinées à être connectées au neutre du courant électrique et qui s'étendent en longueur parallèlement et à distance des barres omnibus de phase, un des deux rails étant interposé entre le groupe des barres omnibus de phase et l'une des deux barres omnibus de neutre tandis que l'autre rail est interposé entre le groupe des barres omnibus de phase et l'autre barre omnibus de neutre.

Les dispositifs de protection contre les surtensions transitoires, qui sont actuellement disponibles pour les tableaux électriques de type « fishbone », ne donnent pas satisfaction. En effet, ces dispositifs de protection sont, en raison des matériels électriques qu'ils intègrent, généralement volumineux si bien qu'ils ne peuvent pas être montés sur l'un ou l'autre des rails du tableau électrique, sauf, le cas échéant, en en occupant un segment conséquent. Cela conduit très souvent à ce qu'au moins une partie des composants du dispositif de protection, voire tout le dispositif de protection se retrouve agencé hors des rails, à distance du groupe de barres omnibus de phase, le cas échéant dans un boitier additionnel dédié, distinct du tableau électrique. Dans tous les cas, cela oblige alors à recourir à un câblage dédié entre au moins une partie du dispositif de protection et les barres omnibus de phase et de neutre : au-delà des contraintes de pose et d'encombrement que cela implique, le câblage précité induit souvent, en raison de sa longueur, une dégradation de l'efficacité du dispositif de protection contre les surtensions.

US 2023 / 223 749 A1 et US 10 734 176 B2 divulguent des dispositifs de protection selon l'art antérieur.

Le but de la présente invention est de remédier à la problématique détaillée ci-dessus, en proposant un dispositif de protection contre les surtensions qui, tout en étant efficace et pratique, soit particulièrement adapté aux tableaux électriques de type « fishbone » précité.

À cet effet, l'invention a pour objet un dispositif de protection contre les surtensions, comportant :
- un boitier, qui définit un axe de profondeur, un axe de largeur et un axe de longueur, qui sont perpendiculaires entre eux, et qui inclut :
   - une façade et un dos, qui sont opposés l'un à l'autre suivant l'axe de profondeur, le dos étant adapté pour coopérer avec un rail d'un tableau électrique afin que le boitier soit supporté par le rail,
   - deux flancs latéraux, qui sont opposés l'un à l'autre suivant l'axe de largeur et qui sont reliés l'un à l'autre suivant l'axe de largeur par la façade et le dos du boitier, et
   - des première et seconde extrémités, qui sont opposées l'une à l'autre suivant l'axe de longueur et qui sont reliées l'une à l'autre suivant l'axe de longueur par la façade, le dos et les deux flancs latéraux du boitier, et
- un module électrique ou bien une pluralité de modules électriques, qui est agencé dans un volume interne du boitier, délimité par conjointement la façade, le dos, les deux flancs latéraux et les première et seconde extrémités du boitier,
dans lequel le module électrique ou bien chacun des modules électriques de ladite pluralité comprend :
- une borne de phase, qui est attenante à la première extrémité du boitier de sorte qu'un conducteur de phase du tableau électrique est raccordable à la borne de phase au niveau de la première extrémité du boitier,
- un emplacement, qui est attenant à la seconde extrémité du boitier, et
- un fusible et une varistance, qui sont reliés en série à la borne de phase dans le volume interne du boitier et qui, suivant l'axe de longueur, sont répartis de manière que le fusible est disposé entre la borne de phase et la varistance et que la varistance est disposée entre le fusible et l'emplacement,
et dans lequel le module électrique ou bien l'un des modules électriques de ladite pluralité comprend en outre un éclateur à gaz et une borne de terre, qui sont :
- reliés en série à la varistance du module électrique ou bien aux varistances respectives des modules électriques de ladite pluralité dans le volume interne du boitier, et
- disposés dans l'emplacement du module électrique considéré de sorte qu'un conducteur de protection du tableau électrique est raccordable à la borne de terre au niveau de la seconde extrémité du boitier.

Une des idées à la base de l'invention est de rendre à la fois compact et modulaire le dispositif de protection, notamment aux fins de son adaptation à un tableau électrique de type « fishbone » précité. Pour ce faire, l'invention prévoit d'agencer, sous forme d'un module électrique, des composants disposés les uns à la suite des autres suivant un axe de longueur du boitier du dispositif de protection, ces composants étant une borne de phase, un fusible et une varistance, qui sont reliés en série à l'intérieur du boitier. L'invention prévoit également que chaque module électrique inclut un emplacement qui, suivant l'axe de longueur, est opposé à la borne de phase, la varistance étant ainsi disposée entre cet emplacement et le fusible : un éclateur à gaz et une borne de terre sont reçus dans l'emplacement du module électrique lorsque le dispositif de protection ne comporte qu'un seul tel module électrique ou bien sont reçus dans l'un seulement des emplacements respectifs des modules électriques lorsque le dispositif de protection comporte une pluralité de tels modules électriques, l'éclateur à gaz et la borne de terre étant reliés en série à la ou aux varistances. Le dispositif de protection conforme à l'invention se décline ainsi avantageusement en une version monophasée à un seul module électrique et une version triphasée à trois modules électriques. La conception modulaire permet au dispositif de protection conforme à l'invention à la fois d'optimiser l'industrialisation de sa fabrication, en adaptant facilement et à moindre coût le dispositif de protection au nombre de phase(s) que le dispositif de protection doit protéger, et de faciliter des interventions de maintenance ou de réparation du dispositif de protection.

Par ailleurs, le fait que le fusible, la varistance et l'éclateur à gaz soient « empilés » suivant l'axe de longueur entre la borne de phase et la borne de terre exploitent, en termes d'agencement, au maximum la dimension du boitier suivant cet axe de longueur, ce qui permet de minimiser autant que possible la dimension du boitier suivant un axe de largeur du boitier. Cette dimension du boitier suivant l'axe de largeur peut ainsi avantageusement atteindre une valeur de 18 mm lorsque le dispositif de protection conforme à l'invention ne comporte qu'un seul module électrique et une valeur de 54 mm lorsque le dispositif de protection conforme à l'invention comporte trois modules électriques, étant remarqué que ces valeurs de 18 mm et 54 mm sont des standards du marché.

Dans tous les cas, la borne de phase et la borne de terre se retrouvent, au sein du dispositif de protection conforme à l'invention, respectivement aux deux extrémités du boitier, opposées suivant l'axe de longueur, ce qui permet de monter le boitier sur un rail d'un tableau électrique de type « fishbone » précité de sorte que la borne de phase soit tournée vers le groupe de barres omnibus de phase afin d'être raccordée facilement et directement à l'une d'elles. Autrement dit, le dispositif de protection conforme à l'invention est particulièrement adapté aux tableaux électriques de type « fishbone » précité. Comme détaillé par la suite, le dispositif de protection conforme à l'invention est avantageusement adapté aux tableaux électriques de type « fishbone », incluant des barres omnibus de neutre : pour ce faire, le dispositif de protection intègre alors une borne de neutre, qui est attenante à la même extrémité du boitier que celle dont est attenante la borne de terre, et qui est reliée à la borne de terre par l'intermédiaire de l'éclateur à gaz.

D'autres aspects avantageux du dispositif conforme à l'invention, qui visent notamment à renforcer les performances de ce dernier, seront également détaillés par la suite.

Ainsi, suivant des caractéristiques additionnelles avantageuses du dispositif de protection conforme à l'invention, prises isolément ou suivant toutes les combinaisons techniquement possibles :
- le module électrique ou bien un des modules électriques de ladite pluralité comprend en outre une borne de neutre qui est (i) reliée à la borne de terre par l'intermédiaire de l'éclateur à gaz dans le volume interne du boitier, et (ii) attenante à la seconde extrémité du boitier de sorte qu'un conducteur de neutre du tableau électrique est raccordable à la borne de neutre au niveau de la seconde extrémité du boitier ;
- l'éclateur à gaz est relié à la varistance du module électrique ou bien aux varistances respectives des modules électriques de ladite pluralité par une plaquette conductrice (i) qui est disposée dans le volume interne du boitier, en étant attenante au dos du boitier, et (ii) contre laquelle une borne de l'éclateur à gaz est appliquée suivant l'axe de profondeur ;

- la borne de neutre est reliée à l'éclateur à gaz par la plaquette conductrice ;
- il est prévu un seul module électrique, le dispositif de protection étant monophasé, et les deux flancs latéraux du boitier sont plans et parallèles, en étant écartés l'un de l'autre, suivant l'axe de largeur, de 18 mm ;
- il est prévu trois modules électriques, le dispositif de protection étant triphasé, et les deux flancs latéraux du boitier sont plans et parallèles, en étant écartés l'un de l'autre, suivant l'axe de largeur, de 54 mm ;
- pour le module électrique ou bien chacun des modules électriques de ladite pluralité, le fusible présente une forme allongée qui s'étend en longueur depuis sensiblement la façade jusqu'à sensiblement le dos du boitier ;
- pour le module électrique ou bien chacun des modules électriques de ladite pluralité, le fusible et la varistance sont reliés l'un à l'autre par une liaison électrique incluant deux contacts et une soudure qui aboute les deux contacts lorsque la soudure est intègre tout en étant adaptée pour se rompre sous l'effet d'un échauffement de la varistance, et l'un des deux contacts est porté par un bras, qui est maintenu fixe en position par la soudure lorsque la soudure est intègre, et qui est entrainé par un ressort dans le volume interne du boitier lorsque la soudure est rompue de manière à écarter l'un de l'autre les deux contacts au moins suivant l'axe de largeur ;
- le dispositif de protection comporte en outre un dispositif électronique de supervision, qui (i) inclut un circuit imprimé assemblé qui est configuré pour fournir une indication de fin de vie pour le module électrique ou bien pour les modules électriques de ladite pluralité, et (ii) est agencé dans le volume interne du boitier de manière que le circuit imprimé assemblé est attenant à l'un des flancs latéraux du boitier ;
- le dispositif électronique de supervision est connecté aux varistances respectives des modules électriques de ladite pluralité par des fils conducteurs respectifs, et le boitier inclut des cloisons internes qui positionnent et maintiennent à l'écart les uns des autres les fils conducteurs dans le volume interne du boitier.

L'invention a également pour objet une installation électrique, comportant :
- un tableau électrique qui comprend (i) des barres omnibus de phase, qui sont destinées à être respectivement alimentées par une phase d'une tension d'une alimentation électrique et qui s'étendent en longueur parallèlement les unes aux autres, en étant disposées côte à côte de manière à former un groupe dans une zone intermédiaire du tableau électrique, (ii) deux rails, qui sont chacun adaptés pour supporter des appareillages électriques et qui s'étendent chacun en longueur parallèlement aux barres omnibus de phase, les deux rails étant disposés le long et de part et d'autre du groupe, et (iii) une barrette de terre qui est destinée à être reliée à la terre, et
- le dispositif de protection tel que défini ci-dessus,
   dans laquelle le boitier est monté sur un des deux rails de sorte que la première extrémité du boitier est tournée vers le groupe des barres omnibus de phase suivant l'axe de longueur,
   dans laquelle la borne de phase du module électrique ou de chacun des modules électriques de ladite pluralité est reliée à l'une des barres omnibus de phase par un conducteur de phase, qui s'étend depuis et transversalement à la barre omnibus de phase considérée et qui est raccordé à la borne de phase du module électrique considéré au niveau de la première extrémité du boitier,
   et dans laquelle la borne de terre est reliée à la barrette de terre par un conducteur de protection, qui est filaire et dont une extrémité est raccordée à la borne de terre au niveau de la deuxième extrémité du boitier.

Suivant des caractéristiques additionnelles avantageuses de l'installation électrique conforme à l'invention :
- un conducteur de neutre est raccordé à la borne de neutre au niveau de la seconde extrémité du boitier ;
- le tableau électrique comprend en outre, pour au moins un des deux rails, une barre omnibus de neutre, qui est destinée à être alimentée par un neutre de l'alimentation électrique et qui s'étend en longueur parallèlement et à distance des barres omnibus de phase, ledit au moins un des deux rails étant interposé entre la barre omnibus de neutre et le groupe des barres omnibus de phase, et la borne de neutre est reliée à la barre omnibus de neutre par le conducteur de neutre qui s'étend depuis et transversalement à la barre omnibus de neutre.

L'invention sera mieux comprise à la lecture de la description qui va suivre, donnée uniquement à titre d'exemple et faite en se référant aux dessins sur lesquels :
- [Fig.1] la figure 1 est une vue schématique en élévation d'une installation électrique conforme à l'invention ;
- [Fig.2] la figure 2 est une vue en perspective d'un dispositif de protection conforme à l'invention, selon un mode de réalisation monophasé ;
- [Fig.3] la figure 3 est une vue similaire à la figure 2, sous un angle d'observation différent ;
- [Fig.4] la figure 4 est une coupe selon le plan IV de la figure 2 ;
- [Fig.5] la figure 5 est une vue en perspective de certains composants internes du dispositif de protection de la figure 2 ;
- [Fig.6] la figure 6 est une vue similaire à la figure 5, sous un angle d'observation différent ;
- [Fig.7] la figure 7 est une vue en perspective d'un dispositif de protection conforme à l'invention, selon un mode de réalisation triphasé ;
- [Fig.8] la figure 8 est une vue similaire à la figure 7, sous un angle d'observation différent ;
- [Fig.9] la figure 9 est une coupe selon le plan IX de la figure 7 ;
- [Fig.10] la figure 10 est une vue en perspective de certains composants internes du dispositif de protection de la figure 7 ;
- [Fig.11] la figure 11 est une vue similaire à la figure 10, sous un angle d'observation différent ;
- [Fig.12] la figure 12 est une vue analogue à celle de la figure 5, mais illustrant une variante du mode de réalisation monophasé du dispositif de protection selon l'invention ; et
- [Fig.13] la figure 13 est une vue similaire à la figure 12, sous un angle d'observation différent.

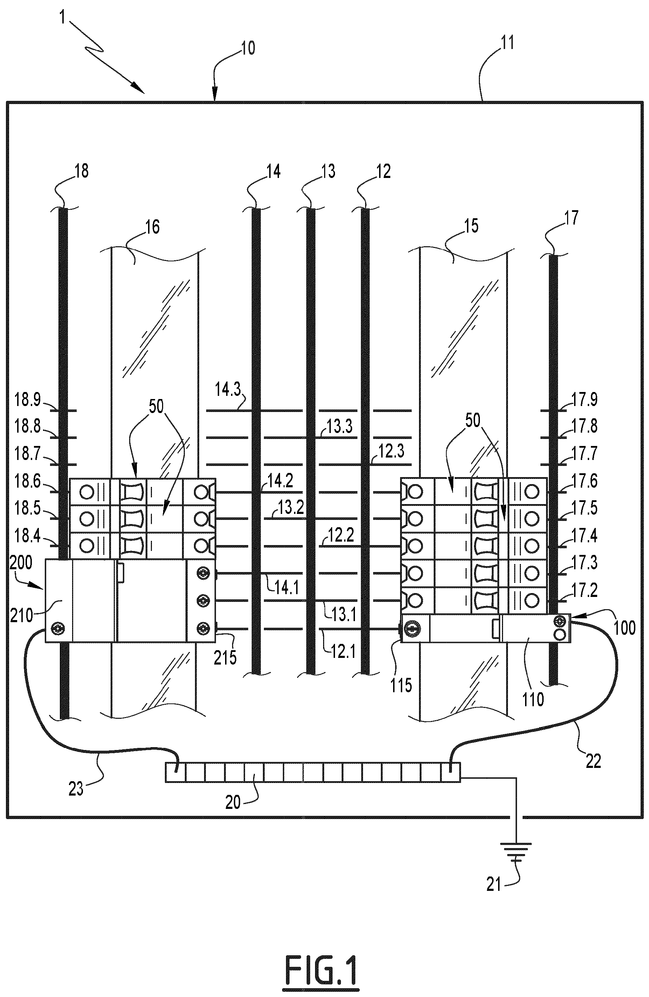

Sur la figure 1 est représentée une installation électrique 1 qui équipe par exemple un bâtiment aux fins du raccordement de ce dernier à un réseau de distribution d'électricité collectif.

L'installation électrique 1 comporte un tableau électrique 10, qui permet de relier l'installation électrique 1 au réseau de distribution d'électricité et qui est rapporté fixement dans le bâtiment.

Comme illustré schématiquement à la figure 1, le tableau électrique 10 comporte une ossature 11 isolante, qui est fixée au bâtiment et qui supporte les autres composants du tableau électrique 10, en particulier les composants électriques de ce dernier, en les isolant électriquement du bâtiment. La forme de réalisation de l'ossature 11 n'est pas limitative.

Le tableau électrique 10 comporte également des barres omnibus de phase, qui sont ici au nombre de trois et qui sont respectivement référencées 12, 13 et 14. Les barres omnibus de phase 12, 13 et 14, couramment appelées « busbar » dans le domaine, sont, en service, respectivement alimentées par une phase d'une tension d'une alimentation électrique, ici triphasée, fournie par le réseau d'électricité précité. A cet effet, les barres omnibus de phase 12, 13 et 14 sont raccordées à un câble d'alimentation du réseau d'électricité, selon des aménagements non limitatifs qui ne sont pas visibles sur la figure 1. Chacune des barres omnibus de phase 12, 13 et 14 comprend principalement une barre conductrice ou bien un ensemble de barres conductrices qui sont alignées et aboutées les unes aux autres. Dans tous les cas, les barres omnibus de phase 12, 13 et 14 s'étendent en longueur parallèlement les unes aux autres, en étant disposées côte à côte tout en étant évidemment isolées électriquement les unes des autres. Les barres omnibus de phase 12, 13 et 14 forment ainsi un groupe qui est agencé dans une zone intermédiaire, voire centrale, du tableau électrique 10, en étant situé dans une région intermédiaire, voire centrale, de l'ossature 11. En pratique, comme illustré schématiquement à la figure 1, les barres omnibus de phase 12, 13 et 14 s'étendent ainsi en longueur suivant la verticale et le groupe qu'elle forme est situé horizontalement à mi-distance de bords d'extrémité latéraux, gauche et droit, de l'armature 11.

Comme illustré à la figure 1 uniquement de manière schématique, la barre omnibus de phase 12 est pourvue de conducteurs de phase 12.1, 12.2, 12.3 qui s'étendent depuis et transversalement à la barre omnibus de phase 12, à la fois de part et d'autre de cette dernière et en étant régulièrement répartis le long de celle-ci. Ces conducteurs de phase 12.1, 12.2, 12.3 sont par exemples des ailettes qui forment, de manière intégrée avec la barre omnibus de phase 12, un peigne électrique, dont les dents correspondent aux ailettes précitées et qui distribue la phase alimentant cette barre omnibus de phase 12. Bien entendu, le nombre de conducteurs de phase 12.1, 12.2, 12.3 de la barre omnibus de phase 12, qui est égal à trois dans l'exemple de la figure 1, n'est pas limitatif.

La barre omnibus de phase 13 est pourvue de conducteurs de phase, 13.1, 13.2 et 13.3, qui sont fonctionnellement et structurellement similaires aux conducteurs de phase 12.1, 12.2 et 12.3 de la barre omnibus de phase 12, mais pour la barre omnibus de phase 13. De même, la barre omnibus de phase 14 est pourvue de conducteurs de phase 14.1, 14.2 et 14.3 qui sont fonctionnellement et structurellement similaires aux conducteurs de phase 12.1, 12.2 et 12.3 de la barre omnibus de phase 12, mais pour la barre omnibus de phase 14. Bien entendu, les différents conducteurs de phase 12.1, 12.2 et 12.3, 13.1, 13.2 et 13.3, 14.1, 14.2 et 14.3 sont isolés électriquement les uns des autres, ainsi que vis-à-vis des deux barres omnibus de phase auxquelles ils ne sont pas associés, tout en étant répartis de manière alternée entre eux, de sorte que, suivant la direction longitudinale des barres omnibus de phase 12, 13 et 14, se succèdent le conducteur de phase 12.1, le conducteur de phase 13.1, le conducteur de phase 14.1, le conducteur de phase 12.2, le conducteur de phase 13.2, le conducteur de phase 14.2, et ainsi de suite.

Le tableau électrique 10 comporte également deux rails 15 et 16 qui sont chacun adaptés pour supporter des appareillages électriques. Les rails 15 et 16 sont par exemple des rails DIN, bien connus en tant que tels dans le domaine. Comme illustré schématiquement à la figure 1, chacun des rails 15 et 16 s'étend en longueur parallèlement aux barres omnibus de phase 12, 13 et 14. Les rails 15 et 16 sont disposés le long et de part et d'autres du groupe que forment les barres omnibus de phase 12, 13 et 14.

En pratique, les spécificités intrinsèques des rails 15 et 16 ne sont pas limitatives du moment que les rails 15 et 16 permettent avantageusement de rendre modulaire le tableau électrique 10 dans le sens où chacun des rails 15 et 16 est conçu pour supporter indifféremment divers appareillages électriques à raccorder aux barres omnibus de phase 12, 13 et 14, étant remarqué que de tels appareillages électriques sont illustrés sur la figure 1, comme détaillé ci-après : ces divers appareillages électriques, qui permettent avantageusement de protéger, de commander et/ou de superviser l'installation électrique 1, sont choisis en fonction des besoins de l'installation électrique 1 et sont interchangeables en cas de maintenance ou d'évolution des besoins précités. Dans tous les cas, les appareillages électriques qui sont effectivement montés sur les rails 15 et 16 se retrouvent agencés perpendiculairement à ces rails 15 et 16 et au groupe que forment les barres omnibus de phase 12, 13 et 14 auxquelles ces appareillages sont connectables directement par l'intermédiaire des conducteurs de phase 12.1 à 14.3. Ainsi, le tableau électrique 10 est de type « fishbone », comme évoqué dans la partie introductive du présent document.

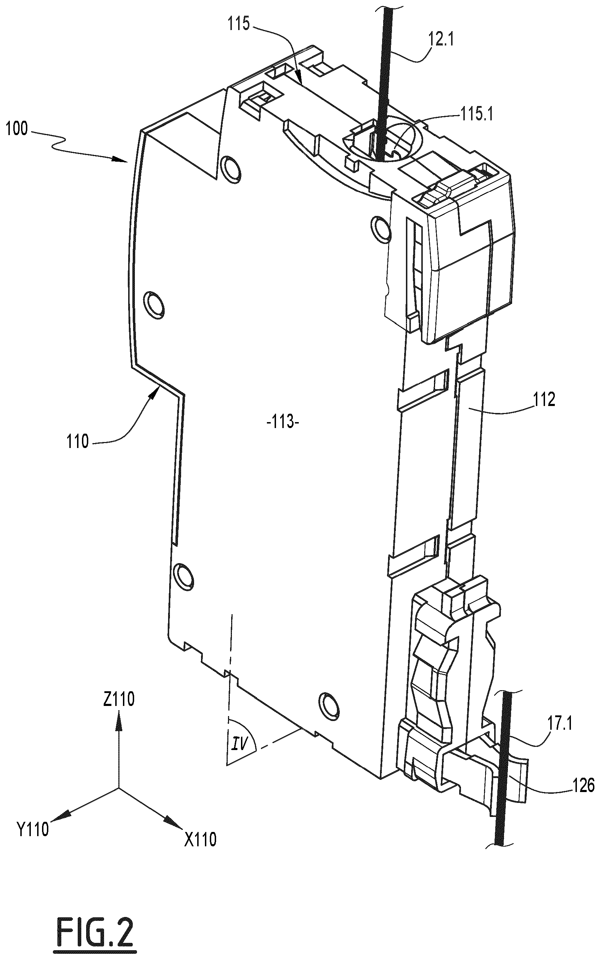

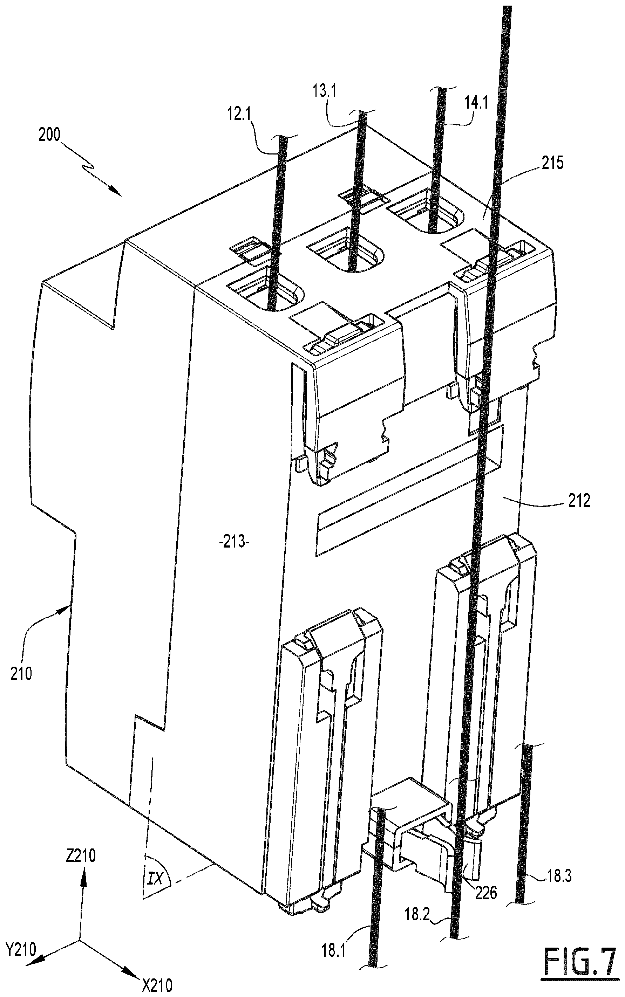

Comme bien visible sur la figure 1, les appareillages électriques, montés sur les rails 15 et 16, incluent deux dispositifs de protection contre les surtensions, à savoir un dispositif de protection 100 monophasé, qui est ici monté sur le rail 15 et qui est représenté seul sur les figures 2 à 6, et un dispositif de protection 200 triphasé, qui est ici monté sur le rail 16 et qui est représenté seul les figures 7 à 11. Comme illustré schématiquement aux figures 1 et 2, le dispositif de protection 100 est relié à la barre omnibus de phase 12 par le conducteur de phase 12.1, étant remarqué que ce dispositif de protection 100 n'est pas relié aux autres barres omnibus de phase 13 et 14. Comme illustré schématiquement aux figures 1 et 7, le dispositif de protection 200 est relié aux barres omnibus de phases 12, 13 et 14 respectivement par les conducteurs de phase 12.1, 13.1 et 14.1. Les dispositifs de protection 100 et 200 vont être décrits plus en détail par la suite.

On notera que, en pratique, une installation électrique du type de l'installation 1 ne comporte que l'un ou l'autre des dispositifs de protection 100 et 200. Sur la figure 1, les dispositifs de protection 100 et 200 sont toutefois représentés tous les deux ensembles dans un même tableau électrique qu'est le tableau 10 pour illustrer la façon dont ces dispositifs de protection 100 et 200 sont agencés dans un tel tableau électrique.

Par ailleurs, dans l'exemple illustré à la figure 1, les appareillages électriques, montés sur les rails 15 et 16, incluent également des disjoncteurs à manette 50. Chacun de ces disjoncteurs à manette 50 est raccordé à l'une des barres omnibus de phase 12, 13 et 14 par l'intermédiaire d'un des conducteurs de phase 12.1 à 14.3, qui appartient à la barre omnibus de phase concernée. En variante non représentée, l'installation électrique 1 comporte de multiples autres appareillages électriques, en complément et/ou en remplacement des disjoncteurs à manette 50, et ce en fonction des besoins de l'installation électrique 1.

En revenant à la description du tableau électrique 10 de la figure 1, ce dernier comporte ici avantageusement deux barres omnibus de neutre 17 et 18. Les barres de neutre 17 et 18 sont, en service, alimentées par un neutre de l'alimentation électrique et sont, à cet effet, raccordées au câble d'alimentation précité selon des aménagements non limitatifs, non visibles sur la figure 1. Chacune des barres omnibus de neutre 17 et 18 s'étend en longueur parallèlement et à distance des barres omnibus de phase 12, 13 et 14, le rail 15 étant interposé entre la barre omnibus de neutre 17 et le groupe que forment les barres omnibus de phase 12, 13 et 14, tandis que le rail 16 est interposé entre la barre omnibus de neutre 18 et ce groupe.

La barre omnibus de neutre 17 est pourvue de conducteurs de neutre 17.1 à 17.9 qui s'étendent depuis et transversalement à la barre omnibus de neutre 17, en étant régulièrement répartis le long de cette barre omnibus de neutre 17. Ces conducteurs de neutre sont par exemple des ailettes qui forment, de manière intégrée avec la barre omnibus de neutre 17, un peigne électrique, dont les dents correspondent aux ailettes précitées et qui distribue le neutre alimentant la barre omnibus de neutre 17. Bien entendu, le nombre de ces conducteurs de neutre 17.1 à 17.9 de la barre omnibus de neutre 17, qui est ici égal à neuf, n'est pas limitatif. Au sein de l'installation électrique 1 envisagée ici, le conducteur de neutre 17.1 relie l'un à l'autre la barre omnibus de neutre 17 et le dispositif de protection 100, comme illustré schématiquement uniquement à la figure 2, le conducteur de neutre 17.1 n'étant pas visible sur la figure 1.

La barre omnibus de neutre 18 est pourvue de conducteurs de neutre 18.1 à 18.9 qui sont fonctionnellement et structurellement similaires aux conducteurs de neutre 17.1 à 17.9 de la barre omnibus de neutre 17, mais pour la barre omnibus de neutre 18. Au sein de l'installation électrique 1, le conducteur de neutre 18.2 raccorde l'un à l'autre la barre omnibus de neutre 18 et le dispositif de protection 200 comme montré schématiquement uniquement à la figure 7 sur laquelle sont aussi illustrés les conducteurs de neutres 18.1 et 18.3, étant remarqué que ces derniers ne sont pas visibles sur la figure 1.

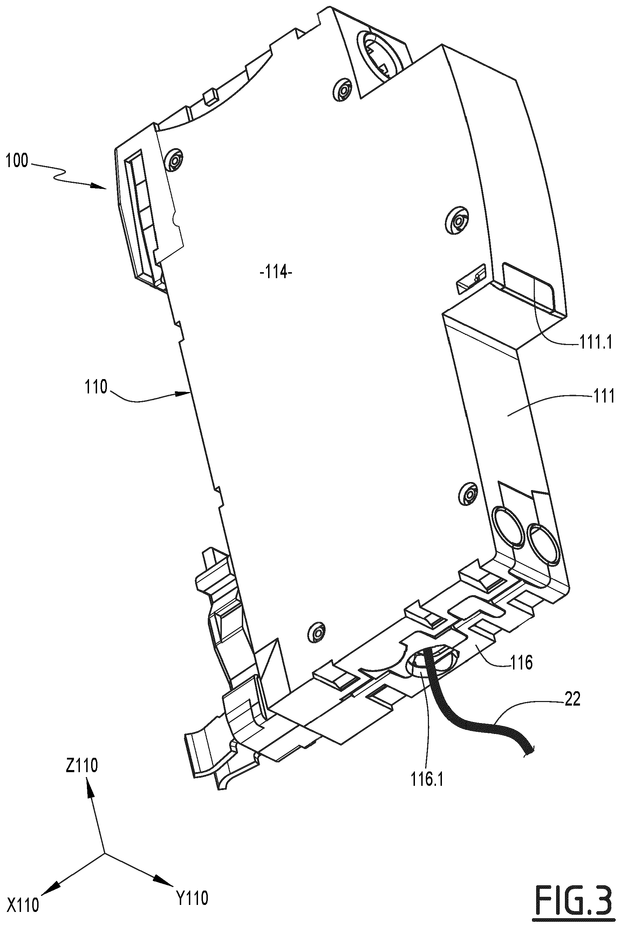

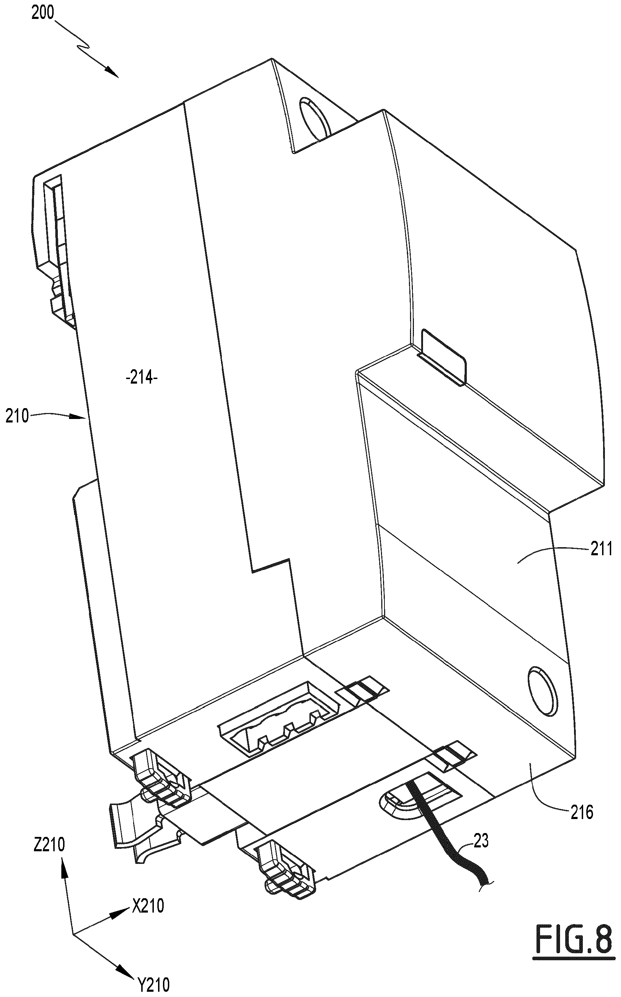

Le tableau électrique 10 comporte également une barrette de terre 20 qui, en service, est reliée directement à la terre du bâtiment, comme illustré schématiquement à la figure 1 sur laquelle la terre du bâtiment est référencée 21. Les aménagements relatifs au raccordement entre la barrette de terre 20 et la terre 21 ne sont pas limitatifs. De même, les spécificités intrinsèques de la barrette de terre 20, ainsi que l'agencement de cette dernière vis-à-vis du reste du tableau électrique 10, ne sont pas limitatifs dès lors que la barrette de terre 20 est, au sein de l'installation électrique 1, raccordable aux dispositifs de protection 100 et 200. Ainsi, comme illustré schématiquement aux figures 1 et 3, le dispositif de protection 100 est relié à la barrette de terre 20 par un conducteur de protection 22 filaire, qui peut être autrement appelé « fil de mise à la terre ». De plus, comme illustré schématiquement aux figures 1 et 8, le dispositif de protection 200 est raccordé à la barrette de terre 20 par un conducteur de protection 23 filaire, qui est également qualifiable de « fil de mise à la terre ».

On va maintenant s'intéresser plus en détail aux dispositifs de protection 100 et 200. Chacun de ces dispositifs de protection 100 et 200 permet de protéger l'installation électrique 1 contre des surtensions transitoires du courant électrique alimentant cette installation, ces surtensions transitoires pouvant avoir pour origine la foudre ou des incidents du réseau de distribution d'électricité. Ces surtensions transitoires sont caractérisées par une élévation transitoire importante de la tension et sont souvent accompagnées d'impulsions de courant de forte intensité.

Le dispositif de protection 100 va d'abord être décrit en détail, en référence aux figures 2 à 6.

Comme bien visible sur les figures 2 à 4, le dispositif de protection 100 comporte un boitier 110 qui définit un axe de profondeur X110, un axe de largeur Y110 et un axe de longueur Z110, qui sont perpendiculaires entre eux. Les axes de profondeur X110, de largeur Y110 et de longueur Z110 sont ainsi fixes par rapport au boitier 110. À l'état monté du dispositif de protection 100 sur le rail 15 au sein de l'installation électrique 1, l'axe de largeur Y110 est parallèle à la direction longitudinale du rail 15 et, par-là, à la direction longitudinale des barres omnibus de phase 12, 13 et 14 et de la barre omnibus de neutre 17. Dans l'exemple considéré ici, l'axe de largeur Y110 s'étend ainsi à la verticale.

Le boitier 110 constitue une enveloppe essentiellement fermée et électriquement isolante. À cet effet, le boitier 110 inclut :
- une façade 111 et un dos 112, qui sont opposés l'un à l'autre suivant l'axe de profondeur X110,
- deux flancs latéraux 113 et 114, qui sont opposés l'un à l'autre suivant l'axe de largeur Y110 et qui sont reliés l'un à l'autre suivant cet axe de largeur Y110 par la façade 111 et le dos 112, et
- une première extrémité 115 et une seconde extrémité 116, qui sont opposées l'une à l'autre suivant l'axe de longueur Z110 et qui sont reliées l'une à l'autre suivant cet axe de longueur Z110 par la façade 111, le dos 112 et les flancs latéraux 113 et 114.

La façade 111, le dos 112, les flancs latéraux 113 et 114 et les première et seconde extrémités 115 et 116 délimitent conjointement entre eux un volume interne V110 du boitier 110, comme bien visible sur la figure 3. Ainsi, le volume interne V110 est séparé de l'extérieur du boitier 110 par la façade 111 et le dos 112 suivant l'axe de profondeur X110, par les flancs latéraux 113 et 114 suivant l'axe de largeur Y110, et par les première et seconde extrémités 115 et 116 suivant l'axe de longueur Z110.

Comme bien visible sur la figure 3, la façade 111 est avantageusement pourvue d'une fenêtre traversante 111.1 qui relie le volume interne V110 avec l'extérieur du boitier 110. L'intérêt de cette fenêtre traversante 111.1 sera donné plus loin.

Comme bien visible sur la figure 2, le dos 112 est conçu pour coopérer avec le rail 15 afin que le boitier 110 soit supporté par ce rail. À cet effet, le dos 112 intègre, notamment sur sa face tournée vers l'extérieur du boitier 110, tout moyen de fixation approprié par l'intermédiaire duquel le boitier 110 peut être attaché fixement sur le rail 15. La forme de réalisation de ce moyen de fixation n'est pas limitative et la fixation que ce dernier fournit est par exemple réalisée par complémentarité de formes et/ou par coincement et/ou par pincement et/ou par encliquetage et/ou etc. Dans tous les cas, à l'état monté du dispositif de protection 100 sur le rail 15, la première extrémité 116 du boitier 110 est tournée vers le groupe des barres omnibus de phase 12, 13 et 14 suivant l'axe de longueur Z110.

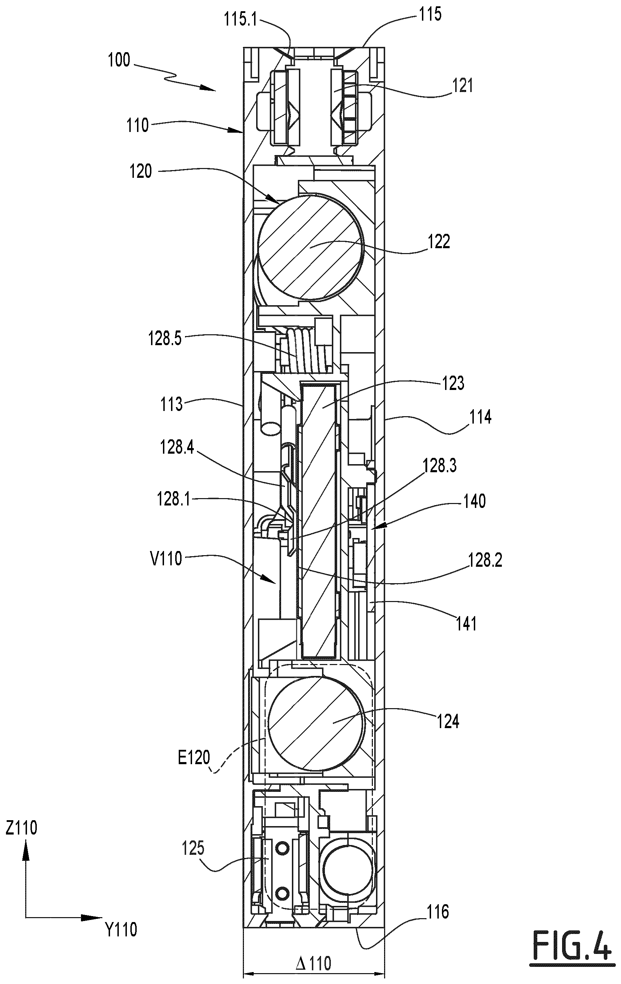

Comme bien visible sur les figures 1 à 4, les flancs latéraux 113 et 114 sont avantageusement plans et parallèles entre eux, chacun de ces flancs latéraux 113 et 114 s'étendant ainsi ici perpendiculairement à l'axe de largeur Y110. De cette façon, le dispositif de protection 100, à l'état monté sur le rail 15, peut être accolé par un appareillage électrique à flancs latéraux plans, monté sur le rail 15 et disposé directement contre l'un ou l'autre des flancs latéraux 113 et 115 suivant l'axe de largeur Y110 : dans l'exemple illustré à la figure 1, l'un des disjoncteurs à manette 50 montés sur le rail 15 est ainsi accolé au boitier 110, en ayant un flanc latéral agencé de façon attenante contre le flanc latéral 113 du boitier 110 suivant l'axe de largeur Y110. De plus, les flancs latéraux 113 et 114 sont écartés l'un de l'autre d'une distance, qui est notée Δ110 sur la figure 4 et qui vaut préférentiellement 18 mm. L'intérêt de ce dimensionnement est lié au fait que cette valeur de 18 mm est un standard du marché qui se retrouve d'ailleurs ici pour les disjoncteurs à manette 50 dont la largeur vaut 18 mm. Ainsi, on comprend que la place occupée par le boitier 110 sur le rail 15 suivant l'axe de largeur Y110 est identique à celle que peut occuper un autre appareillage électrique montable sur le rail 15, tel que les disjoncteurs à manette 50, ce qui assure une modularité remarquable pour l'installation électrique 1.

Comme bien visible sur les figures 2 et 4, la première extrémité 115 du boitier 110 est traversée, ici suivant l'axe Z110, par un passage de branchement 115.1 qui relie le volume interne V110 avec l'extérieur du boitier 110. En service, le passage de branchement 115.1 permet de faire s'étendre le conducteur de phase 12.1 entre l'intérieur et l'extérieur du boitier 110 via ce passage de branchement 115.1, comme illustré schématiquement sur les figures 1 et 2.

Comme bien visible sur les figures 3 et 4, la seconde extrémité 116 du boitier 110 est traversée, ici suivant l'axe de longueur Z110, par un passage de branchement 116.1 qui relie le volume interne V110 avec l'extérieur du boitier 110. En service, ce passage de branchement 116.1 permet de faire s'étendre l'une des extrémités du conducteur de protection 22 entre l'intérieur et l'extérieur du boitier 110 via ce passage de branchement 116.1, comme illustré schématiquement sur les figures 1 et 3.

En pratique, le boitier 110 est constitué de plusieurs pièces isolantes, assemblées fixement les unes aux autres par tous moyens appropriés qui sont intégrés au boitier 110, étant remarqué que les spécificités correspondantes ne sont pas limitatives.

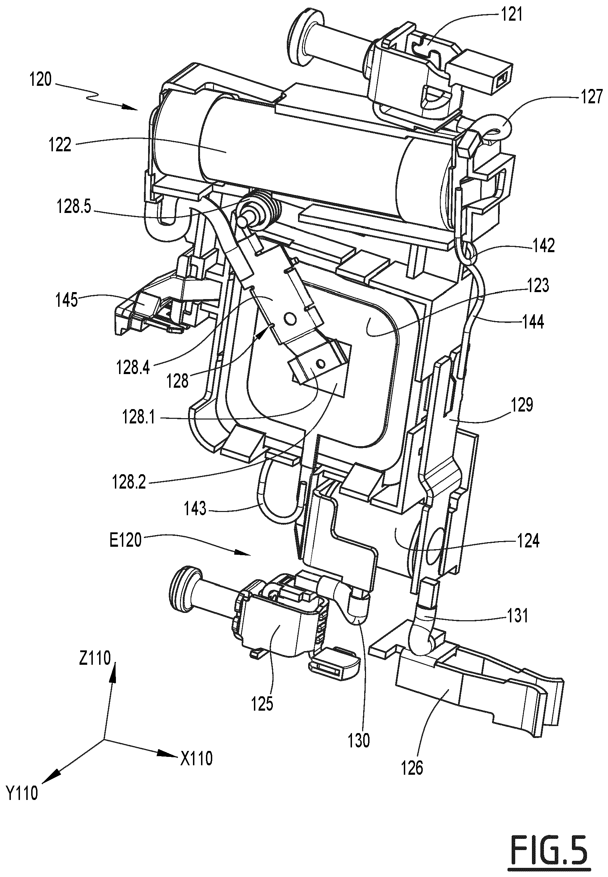

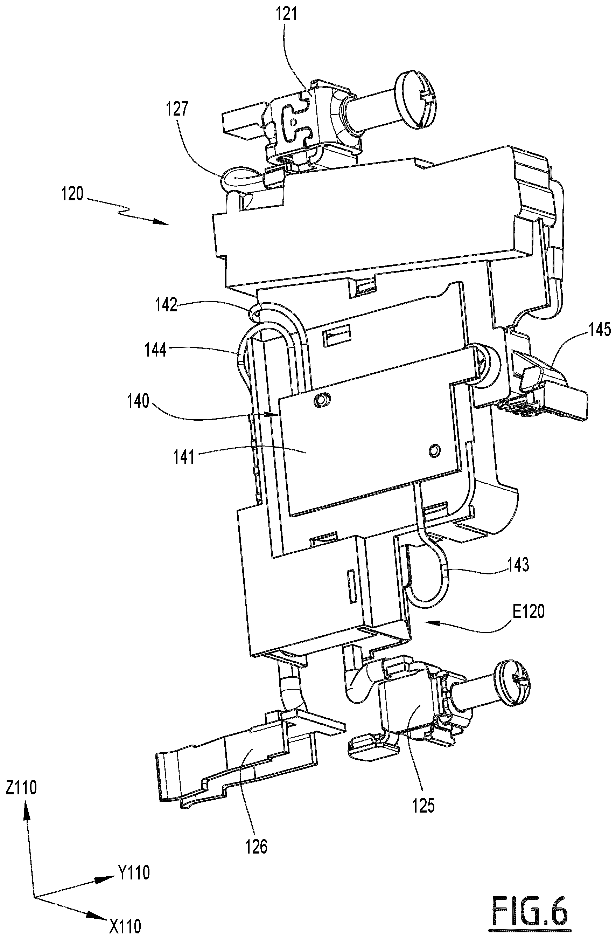

Le dispositif de protection 100 comporte également un module électrique 120. Comme montré à la figure 4, le module électrique 120 est agencé dans le volume interne V110 du boitier 110. Sur les figures 5 et 6, le module électrique 120 est représenté en l'absence du boitier 110.

Le module électrique 120 assure une double fonction, à savoir une fonction de coupe-circuit et une fonction d'écrêtage de tension. Ainsi, le module électrique 120 permet, lorsque le dispositif de protection 100 est raccordé au conducteur de phase 12.1, au conducteur de neutre 17.1 et au conducteur de protection 22, à la fois (i) d'arrêter le passage à travers lui d'un courant électrique provenant du conducteur de phase 12.1 lorsque l'intensité du courant dépasse une valeur prédéterminée et (ii) d'évacuer facilement un courant circulant à travers lui en cas de surtension, c'est-à-dire lorsqu'une tension à ses bornes dépasse un seuil prédéterminé, tout en laissant passer un courant de fuite quasi nul en dehors d'une telle surtension. En pratique, la double fonction précitée est réalisée de manière séquentielle, dans le sens où, généralement, la fonction de coupe-circuit est mise en œuvre après la fonction d'écrêtage de tension.

A cet effet, comme bien visible sur les figures 4 à 6, le module électrique 120 comporte une borne de phase 121, un fusible 122, une varistance 123, un éclateur à gaz 124, une borne de terre 125 et une borne de neutre 126, qui vont être successivement décrits plus en détail ci-après.

La borne de phase 121 est conçue pour se raccorder à un conducteur de phase, tel que le conducteur de phase 12.1 au sein de l'installation électrique 1. Ainsi, à l'état monté du dispositif de protection 100 sur le rail 15, le conducteur de phase 12.1 est raccordé au module électrique 120 et, par-là, au dispositif de protection 100 par l'intermédiaire de la borne de phase 121. Dans l'exemple considéré aux figures, la borne de phase 121 est une borne à vis, mais, en variante non représentée, elle est à ressort. Plus généralement, les spécificités de cette borne de phase 121 ne sont pas limitatives, comme ré-évoqué plus loin.

Dans tous les cas, comme bien visible à la figure 4, la borne de phase 121 est disposée de façon attenante à la première extrémité 115 du boitier 110 afin qu'un conducteur de phase soit raccordable à la borne de phase 121 au niveau de cette première extrémité 115 du boitier 110. Ainsi, ici, la borne de phase 121 est agencée essentiellement dans le volume interne V110, en étant disposée contre la paroi de la première extrémité 115 du boitier 110, qui est traversée par le passage de branchement 115.1, la borne de phase 121 étant alignée avec ce passage de branchement 115.1 : de cette façon, lorsque le conducteur de phase 12.1 s'étend dans le passage de branchement 115.1, ici suivant l'axe de longueur Z110, ce conducteur de phase est reçu dans la borne de phase 121 aux fins de la connexion électrique entre ce conducteur de phase et la borne de phase, ici moyennant le serrage d'une vis de la borne de phase 121.

Le fusible 122 assure, au sein du module électrique 120, la fonction coupe-circuit mentionnée plus haut. En pratique, les spécificités électriques intrinsèques du fusible 122 ne sont pas limitatives, le fusible 122 relevant de technologies connues en soi dans le domaine. A titre d'exemple non limitatif, le fusible 122 est conçu pour tenir aux ondes 8/20µs, comme défini par exemple dans la norme parafoudre IEC 61643.

Dans tous les cas, le fusible 122 est relié en série à la borne de phase 121 dans le volume interne V110, ici par une tresse conductrice 127 qui est agencée en totalité dans le volume interne V110, en reliant l'une à l'autre la borne de phase 121 et une borne d'entrée du fusible 122.

De plus, le fusible 122, qui est avantageusement agencé en totalité dans le volume interne V110, est disposé, suivant l'axe de longueur Z110, entre la borne de phase 121 et le reste du module électrique 120. Ainsi, la borne de phase 121 et le fusible 122 se retrouvent empilés suivant l'axe de longueur Z110.

Suivant un aspect préférentiel qui est mis en œuvre dans l'exemple illustré aux figures, le fusible 122 présente une forme allongée qui s'étend en longueur depuis sensiblement la façade 111 jusqu'à sensiblement le dos 112 du boitier 110. Plus précisément, ici, le fusible 122 présente une forme globalement cylindrique, qui est centrée sur un axe géométrique, traversant la façade 111 et le dos 112 du boitier 110, et dont les extrémités longitudinales opposées sont respectivement attenantes à la façade 111 et au dos 112. Quelles que soient les spécificités géométriques de la forme allongée du fusible 122, cet agencement de ce dernier permet d'optimiser l'encombrement du volume interne V110 par le fusible 122.

La varistance 123 assure en partie la fonction d'écrêtage de tension, mentionnée plus haut. En effet, la varistance 123 est conçue pour présenter une impédance faible lorsque la tension à ses bornes dépasse un seuil prédéterminé, permettant ainsi l'évacuation du courant à travers elle en cas de surtension, tandis que lorsque la tension à ses bornes est sous le seuil prédéterminé précité, autrement dit en dehors d'une surtension, l'impédance de la varistance 123 est forte de manière à limiter, voire à rendre quasi nul un courant de fuite à travers elle. En pratique, les spécificités électriques intrinsèques de la varistance 123 ne sont pas limitatives et relèvent de technologies connues en soi dans le domaine. A titre d'exemple non limitatif, la varistance 123 permet de supporter une onde de choc 8/20 µs, 20 kA tout en limitant la tension à ses bornes à niveau inférieur 1.5 kV. Selon un autre exemple, l'onde de choc à supporter est de 10/350 µs, tout en supportant un courant de 12.5 kA et en limitant la tension à ses bornes à 1.5 kV.

Dans tous les cas, la varistance 123 est reliée en série au fusible 122 dans le volume interne V110, ici par une liaison électrique 128 qui est agencée en totalité dans le volume interne V110, en reliant l'une à l'autre une borne de sortie du fusible 122 et une borne d'entrée de la varistance 123. Le fusible 122 et la varistance 123 sont ainsi reliés en série à la borne de phase 121 dans le volume interne V110.

De plus, la varistance 123, qui est avantageusement agencée en totalité dans le volume interne V110, est disposée, suivant l'axe de longueur Z10, entre, d'une part, le fusible 122 et la borne de phase 121 et, d'autre part, le reste du module électrique 120. Ainsi, suivant l'axe de longueur Z110, la borne de phase 121, le fusible 122 et la varistance 123 sont répartis de manière que le fusible 122 est disposé entre la borne de phase 121 et la varistance 123. En d'autres termes, la borne de phase 121, le fusible 122 et la varistance 123 sont empilés suivant l'axe de longueur Z110.

Suivant un aspect préférentiel, qui est mis en œuvre ici, la liaison électrique 128 inclut, comme bien visible sur les figures 4 et 5, deux contacts 128.1 et 128.2, ainsi qu'une soudure 128.3 qui aboute les contacts 128.1 et 128.2 lorsque la soudure 128.3 est intègre tout en étant adaptée pour se rompre sous l'effet d'un échauffement de la varistance 123. Ainsi, les contacts 128.1 et 128.2 et la soudure 128.3 forment conjointement un déconnecteur thermique, qui, tant que la varistance 123 est fonctionnelle et ne s'échauffe pas, maintient la varistance 123 reliée au fusible 122 par la liaison électrique 128, mais qui, lorsque la varistance 123 s'échauffe trop, notamment du fait de son vieillissement, coupe la liaison électrique 128 et rend donc inopérant le module électrique 120. Afin que les contacts 128.1 et 128.2 s'écartent franchement l'un de l'autre lorsque la soudure 123.3 est rompue, l'un des deux contacts, ici le contact 128.1, est porté fixement par un bras 128.4 de la liaison électrique 128 : ce bras 128.4 est maintenu fixe en position par la soudure 128.3 lorsque cette dernière est intègre, mais est entrainé par un ressort 128.5 lorsque la soudure 128.3 est rompue de manière à écarter l'un de l'autre les contacts 128.1 et 128.2. L'écartement relatif des contacts 128.1 et 128.2 sous l'effet du bras 128.4 entrainé par le ressort 128.5 est avantageusement opéré au moins suivant l'axe de largeur Y110, afin notamment d'optimiser l'encombrement du volume interne V110 par le bras 128.4. À cet effet, la varistance 123 est dimensionnée et agencée dans le volume interne V110 de manière à ménager latéralement à elle, suivant l'axe de largeur Y110, un espace libre, qui est inclus dans le volume interne V110 et dans lequel le bras 128.4 est agencé et entrainable par le ressort 128.5. Ici, la varistance 123 présente ainsi une forme globalement parallélépipédique, dont les deux plus petites dimensions s'étendent suivant l'axe de profondeur X110 et l'axe de longueur Z110, et dont une face latérale, agencée perpendiculairement à l'axe de largeur Y110, forme la borne d'entrée de la varistance 123, en portant fixement le contact 128.2, tout en étant suffisamment distante, suivant l'axe de largeur Y110, du flanc latéral 113 du boitier 110 pour ménager l'espace libre précité, comme bien visible sur la figure 4.

L'éclateur à gaz 124 assure en partie la fonction d'écrêtage de tension, mentionnée plus haut. En effet, l'éclateur à gaz 124 est conçu pour empêcher le passage du courant à travers lui en dehors d'une surtension, en isolant sa borne d'entrée et sa borne de sortie par un gaz que contient l'éclateur à gaz 124, tandis que lorsque la tension entre ses bornes d'entrée et de sortie dépasse un seuil prédéterminé, un arc électrique se forme dans le gaz précité et permet le passage du courant à travers l'éclateur à gaz 124. En pratique, les spécificités électriques intrinsèques de l'éclateur à gaz 124 ne sont pas limitatives et relèvent de technologies qui sont connues en soi dans le domaine. À titre d'exemple non limitatif, l'éclateur à gaz comprend un tube en céramique fermé à ses deux extrémités par des coupelles métalliques faisant office d'électrodes, notamment de manière à tenir une onde de choc 8/20 µS, tout en supportant un courant de 40 kA et en limitant la surtension à 1.5kV.

Dans tous les cas, l'éclateur à gaz 124 est relié en série à la varistance 123 dans le volume interne V110, ici par une plaquette conductrice 129 qui est agencée en totalité dans le volume interne V110, en reliant l'une à l'autre la borne de sortie de la varistance 123 à la borne d'entrée de l'éclateur à gaz 124.

De plus, l'éclateur à gaz 124, qui est avantageusement agencé en totalité dans le volume interne V110, est disposé, suivant l'axe de longueur Z110 entre, d'une part, la borne de phase 121, le fusible 122 et la varistance 123 et, d'autre part, le reste du module électrique 120. Ainsi, suivant l'axe de longueur Z110, la varistance 123 est disposée entre le fusible 122 et l'éclateur à gaz 124. Autrement dit, la borne de phase 121, le fusible 122, la varistance 123 et l'éclateur à gaz 124 sont empilés suivant l'axe de longueur Z110.

Suivant un aspect préférentiel, qui est mis en œuvre ici, la plaquette conductrice 129 s'étend transversalement à l'axe de profondeur X110 et est disposée dans le volume interne V110 de façon attenante au dos 112 du boitier 110, en particulier parallèlement au dos 112. De plus, la borne d'entrée de l'éclateur à gaz 124 est appliquée contre cette plaquette conductrice 29 suivant l'axe de profondeur X110. Cet agencement permet de limiter l'encombrement du volume interne V110 par l'éclateur à gaz 124.

La borne de terre 125 est conçue pour se raccorder à un conducteur de protection, tel que le conducteur de protection 22 au sein de l'installation électrique 1. Ainsi, à l'état monté du dispositif de protection 100 sur le rail 15, le conducteur de protection 22 est raccordé au module électrique 120 et, par-là, au dispositif de protection 100 par l'intermédiaire de la borne de terre 125. Dans l'exemple considéré aux figures, la borne de terre 125 est une borne à vis, mais, suivant des considérations similaires à celles relatives à la borne de phase 121, les spécificités de la borne de terre 125 ne sont pas limitatives.

Dans tous les cas, comme bien visible sur la figure 4, la borne de terre 125 est disposée de façon attenante à la seconde extrémité 116 du boitier 110 afin qu'un conducteur de protection soit raccordable à la borne de terre 125 au niveau de cette seconde extrémité 116 du boitier 110. Ainsi, ici, la borne de terre 125 est agencée essentiellement dans le volume interne V110, en étant disposée contre la paroi de la seconde extrémité 116 du boitier 110, qui est traversée par le passage de branchement 116.1, la borne de terre 125 étant alignée avec ce passage de branchement 116.1 : de cette façon, lorsqu'une extrémité du conducteur de protection 22 s'étend dans le passage de branchement 116.1, ici suivant l'axe de longueur Z110, cette extrémité du conducteur de protection est reçue dans la borne de terre 125 aux fins de la connexion électrique entre elles, ici moyennant le serrage d'une vis de la borne de terre 125.

La borne de terre 125 et l'éclateur à gaz 124 sont avantageusement répartis suivant l'axe de longueur Z110 de manière que l'éclateur à gaz 124 est disposé entre la varistance 123 et la borne de terre 125. Ainsi, ici, la borne de phase 121, le fusible 122, la varistance 123, l'éclateur à gaz 124 et la borne de terre 125 sont empilés suivant l'axe de longueur Z110. Cet empilement confère au module électrique 120 une compacité remarquable suivant l'axe de largeur Y110, ce qui permet le dimensionnement préférentiel de la distance Δ110, indiqué plus haut.

Dans tous les cas, la borne de terre 125 est reliée en série à l'éclateur à gaz 124 dans le volume interne V110, ici par une tresse conductrice 130 qui est agencée en totalité dans le volume interne V110, en reliant l'une à l'autre la borne de sortie de l'éclateur à gaz 124 et la borne de terre 125. Ainsi, la borne de terre 125 est reliée en série à la varistance 123 par l'intermédiaire de l'éclateur à gaz 124.

La borne de neutre 126 est conçue pour se raccorder à un conducteur de neutre, tel que le conducteur de neutre 17.1 au sein de l'installation électrique 1. Ainsi, à l'état monté du dispositif de protection 100 sur le rail 15, le conducteur de neutre 17.1 est raccordé au module électrique 120 et, par-là, au dispositif de protection 100 par l'intermédiaire de la borne de neutre 126. Dans l'exemple considéré aux figures, la borne de neutre 126 est une borne automatique, également appelée borne embrochable, ici munie d'une pince, mais les spécificités de la borne de neutre 126 ne sont pas limitatives, comme ré-évoqué plus loin.

Dans tous les cas, la borne de neutre 126 est disposée de façon attenante à la seconde extrémité 116 du boitier 110 afin qu'un conducteur de neutre soit raccordable à la borne de neutre 126 au niveau de cette seconde extrémité 116 du boitier 110. Eu égard au fait que, ici, la borne de neutre 126 est une borne embrochable, cette borne de neutre 126 s'étend depuis le volume interne V110 jusqu'à l'extérieur du boitier 110, de sorte que, lors du montage du dispositif de protection 100 sur le rail 15, le conducteur de neutre 17.1 se retrouve directement engagé dans la borne de neutre 126, plus précisément dans la partie de cette dernière, ici la pince précitée, s'étendant à l'extérieur du boitier 110, aux fins de la connexion automatique entre ce conducteur de neutre et la borne de neutre.

Suivant l'axe de longueur Z110, la borne de neutre 126 est avantageusement disposée sensiblement au même niveau que la borne de terre 125. L'encombrement du volume interne V110 par la borne de neutre 126 est ainsi optimisé. En particulier, la présence de la borne de neutre 126 n'impacte pas la compacité du module électrique 120 suivant l'axe de longueur Z110.

Dans tous les cas, la borne de neutre 126 est reliée à la borne de terre 125 par l'intermédiaire de l'éclateur à gaz 124 dans le volume interne V10. Pour des raisons pratiques avantageuses, la borne de neutre 126 est préférentiellement reliée à la borne d'entrée de l'éclateur à gaz 124 par la plaquette conductrice 129. Ici, la plaquette conductrice 129 et la borne de neutre 126 sont reliées l'une à l'autre par une tresse conductrice 131 qui est agencée en totalité dans le volume interne V110.

En tenant compte de ce qui a été exposé jusqu'ici, on comprend que la fonction d'écrêtage de tension, assurée par le module électrique 120, est opérée par la varistance 123 et/ou l'éclateur à gaz 124 en fonction des bornes du module électrique 120 entre lesquelles une surtension survient. Ainsi, lorsqu'une surtension est appliquée entre la borne de phase 121 et la borne de terre 125, la fonction d'écrêtage de tension est assurée conjointement par la varistance 123 et par l'éclateur à gaz 124. Lorsqu'une surtension est appliquée entre la borne de phase 121 et la borne de neutre 126, la fonction d'écrêtage de tension est assurée exclusivement par la varistance 123. Lorsqu'une surtension est appliquée entre la borne de terre 125 et la borne de neutre 126, la fonction d'écrêtage de tension est assurée exclusivement par l'éclateur à gaz 124.

Avant de poursuivre la description détaillée du dispositif de protection 100, on définit un emplacement E120 du module électrique 120, qui est avantageusement agencé en totalité dans le volume interne V10 et dans lequel sont disposés l'éclateur à gaz 124 et la borne de terre 125, mais à l'extérieur duquel sont disposés la borne de phase 121, le fusible 122 et la varistance 123. Ainsi, la varistance 123 est disposée, suivant l'axe de longueur Z110, entre le fusible 122 et cet emplacement E120, ce dernier étant attenant à la seconde extrémité 116 du boitier 110. L'intérêt de cet emplacement E120 apparaitra plus loin lors de la description du dispositif de protection 200.

En revenant maintenant à la description du dispositif de protection 100, ce dernier comporte avantageusement un dispositif électronique de supervision 140 qui permet de contrôler l'opérationnalité du module électrique 120. Le fait que le module électrique 120 puisse ne plus être opérationnel, notamment au bout d'un certain temps d'utilisation, est lié au fait que, à chaque fois que le module électrique 120 est sollicité par application d'une surtension à ses bornes, certains de ses composants, en particulier le fusible 122 et la varistance 123, subissent des dommages, si bien que, à mesure que les endommagements correspondants progressent, la capacité du module électrique 120 à protéger contre les surtensions futures diminue, ce qui revient à dire que la durée de vie restante de ce dispositif de protection se réduit. Dès lors, il y a un réel intérêt à fournir à un utilisateur du dispositif de protection 100 une indication de fin de vie pour le module électrique 120, afin que l'utilisateur puisse être averti qu'il est nécessaire d'opérer une maintenance ou un remplacement du dispositif de protection 100 dès que le module électrique 120 est considéré comme n'étant plus opérationnel.

Le dispositif électronique de supervision 140 comporte un circuit imprimé assemblé 141 qui est configuré pour fournir une indication de fin de vie pour le module électrique 120. A cet effet, le circuit imprimé assemblé 141 comporte une carte de circuit imprimé et des composants électroniques, qui sont portés par la carte de circuit imprimé et qui sont adaptés pour traiter des signaux électriques appropriés provenant du module électrique 120, pour en déduire l'indication de fin de vie. En pratique, le traitement correspondant est connu en tant que tel dans le domaine et ne sera donc pas décri ici plus avant. Dans l'exemple illustré aux figures, le circuit imprimé assemblé 141 reçoit et traite ainsi des signaux électriques provenant respectivement de la borne d'entrée du fusible 122, de la borne d'entrée de la varistance 123 et de la borne de sortie de la varistance 123, afin de déterminer des données représentatives de l'opérationnalité de la varistance 123, en particulier le vieillissement de cette dernière et/ou l'intégrité de la soudure 128.3, et l'opérationnalité du fusible 122, en particulier l'intégrité de ce dernier. Ici, les signaux électriques précités sont transmis par un fil conducteur 142, qui connecte le circuit imprimé assemblé 141 à la borne d'entrée du fusible 122, un fil conducteur 143, qui connecte le circuit imprimé assemblé 141 à la borne d'entrée de la varistance 123, et par un fil conducteur 144, qui connecte le circuit imprimé assemblé 141 à la plaquette conductrice 129 et, par-là, à la borne de sortie de la varistance 123.

L'indication de fin de vie, fournie par le circuit imprimé assemblé 141, est avantageusement de nature lumineuse, c'est-à-dire sous forme d'un signal lumineux qu'émet un ou des composants électroniques ad hoc du circuit imprimé assemblé 141. Ce signal lumineux est transmis à l'extérieur du boitier 110, à l'attention de l'utilisateur, par un guide de lumière 145 qui s'étend du circuit imprimé assemblé 141 jusqu'à la fenêtre traversante 111.1 de la façade 111 du boitier 110, comme bien visible sur les figures 3, 5 et 6.

Quelles que soient les spécificités fonctionnelles et structurelles du circuit imprimé assemblé 141, ce dernier est avantageusement agencé dans le volume interne V110 de manière que ce circuit imprimé assemblé 141 est attenant à l'un des flancs latéraux 113 et 114 du boitier 110, ici au flanc latéral 114. L'encombrement du volume interne V110 par le circuit imprimé assemblé 141 et, plus généralement, par le dispositif électronique de supervision 140 est ainsi optimisé.

En pratique, le boitier 110 est intérieurement aménagé pour supporter et maintenir en place le module électrique 120 et le dispositif électronique de supervision 140. Autrement dit, le boitier 110 comporte, dans son volume interne V110, des aménagements électriquement isolants, qui sont dédiés au support fixe du module électrique 120 et du dispositif électronique de supervision 140, en particulier de la borne de phase 121, du fusible 122, de la varistance 123, de l'éclateur à gaz 124, de la borne de terre 125, de la borne de neutre 126 et du circuit imprimé assemblé 141.

Le dispositif de protection 200 va maintenant être décrit en détail, en référence aux figures 7 à 11.

Comme bien visible sur les figures 7 à 9, le dispositif de protection 200 comporte un boitier 210 qui définit un axe de profondeur X210, un axe de largeur Y210 et un axe de longueur Z210, qui sont respectivement similaires fonctionnellement aux axes de profondeur X110, de largeur Y110 et de longueur Z110. A l'état monté du dispositif de protection 200 sur le rail 16 au sein de l'installation électrique 1, l'axe de largeur Y210 est parallèle à la direction longitudinale des barres omnibus de phase 12, 13 et 14, du rail 16 et de la barre omnibus de neutre 18.

De plus, le boitier 210 inclut une façade 211, un dos 212, des flancs latéraux 213 et 214, et des première et seconde extrémités 215 et 216, qui sont respectivement similaires fonctionnellement à la façade 111, au dos 112, aux flancs latéraux 113 et 114, et aux première et seconde extrémités 115 et 116 du boitier 110. En particulier, la façade 211, le dos 212, les flancs latéraux 213 et 214 et les première et seconde extrémités 215 et 216 délimitent conjointement un volume interne V210 du boitier 210, qui est fonctionnellement similaire au volume interne V110.

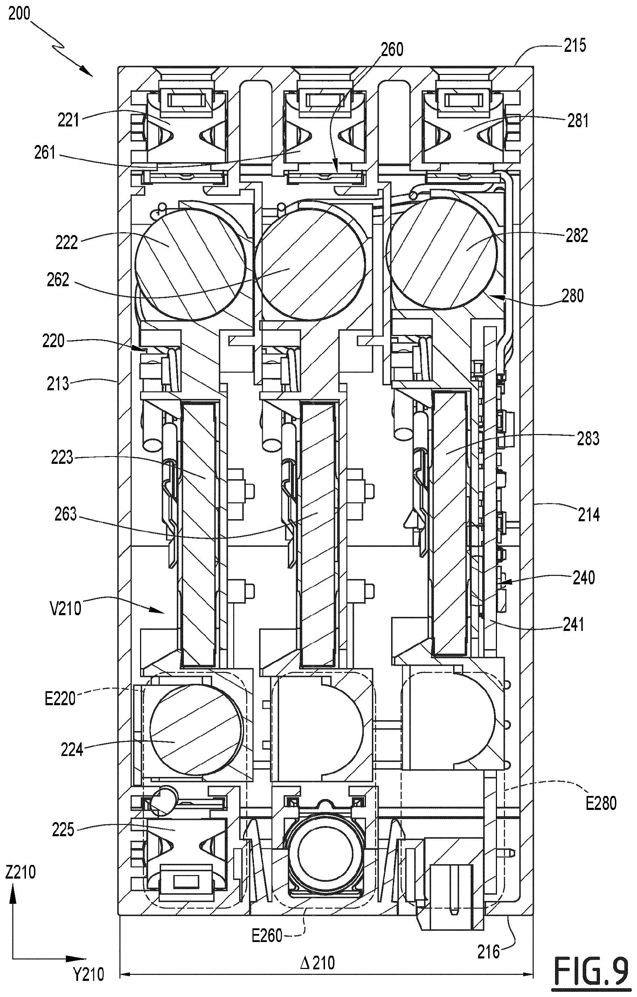

Le boitier 210 se distingue du boitier 110 essentiellement par son dimensionnement suivant l'axe de largeur Y210. Ainsi, la distance Δ210, qui, comme illustré à la figure 9, sépare l'un de l'autre les flancs latéraux 213 et 214 suivant l'axe de largeur Y210, vaut le triple de la distance Δ110, à savoir préférentiellement 54 mm.

Ce dimensionnement du boitier 210 est lié au fait que le dispositif de protection 200 ne comporte pas un seul module électrique, comme c'est le cas pour le module électrique 120 au sein du dispositif de protection 100, mais trois modules électriques 220, 260 et 280, qui sont répartis côte à côte suivant l'axe de largeur Y210.

Comme montré aux figures 9 à 11, chacun des modules électriques 220, 260 et 280 comporte :
- une borne de phase 221, 261, 281, qui est fonctionnellement, voire structurellement similaire à la borne de phase 121 et qui, à l'état monté du dispositif de protection 200 sur le rail 16, est, au niveau de la première extrémité 215 du boitier 210, raccordée au conducteur de phase 12.1, 13.1, 14.1, comme illustré schématiquement à la figure 7, ces trois bornes de phase 221, 261 et 281 étant réparties côte à côte suivant l'axe de largeur Y210 ;
- un fusible 222, 262, 282, qui est fonctionnellement, voire structurellement similaire au fusible 122, en particulier vis-à-vis de la borne de phase 221, 261, 281, ces trois fusibles 222, 262 et 282 étant répartis côte à côte suivant l'axe de largeur Y210 ; et
- une varistance 223, 263, 283, qui est fonctionnellement, voire structurellement similaire à la varistance 123, en particulier vis-à-vis du fusible correspondant 222, 262, 282, ces trois varistances 223, 263 et 283 étant réparties côte à côte suivant l'axe de largeur Y210.

Comme indiqué schématiquement à la figure 9, chacun des modules électriques 220, 260 et 280 comporte également un emplacement E220, E260, E280, qui, de façon similaire à l'emplacement E120, est agencé dans le volume interne V210 de façon que l'emplacement E220, E260, E280 soit attenant à la seconde extrémité 216 du boitier 210 et que la varistance correspondante 223, 263, 283 soit disposée, suivant l'axe de longueur Z210, entre le fusible correspondant 222, 268, 282 et l'emplacement E220, E260, E280. Les trois emplacements E220, E260 et E280 sont répartis côte à côte suivant l'axe de largeur Y210.

Les modules électriques 220, 260 et 280 se distinguent du module électrique 120 par le fait qu'un seul des trois modules électriques 220, 260 et 280, ici le module électrique 220, comporte un éclateur à gaz 224 et une borne de terre 225.

L'éclateur à gaz 224 et la borne de terre 225 sont respectivement similaires fonctionnellement, voire structurellement, à l'éclateur 124 et à la borne de terre 125. En particulier, l'éclateur à gaz 224 et la borne de terre 225 sont reliés en série aux varistances 223, 263 et 283 dans le volume interne V210. De plus, à l'état monté du dispositif de protection 200 sur le rail 16, le conducteur de protection 23 est raccordé à la borne de terre 225 au niveau de la seconde extrémité 216 du boitier 210, comme indiqué schématiquement sur la figure 8.

L'éclateur à gaz 224 et la borne de terre 225 sont disposés dans l'emplacement E220 du module électrique 220, sans occuper les emplacements E260 et E280 des deux autres modules électriques 260 et 280. On comprend ainsi l'intérêt de la structuration modulaire des dispositifs de protection 100 et 200, liée à leurs modules électriques 120, 220, 260 et 280, dans le sens où la borne de phase 121, le fusible 122, la varistance 123 et l'emplacement 120 avant que ce dernier ne soit potentiellement occupé par l'éclateur à gaz 124 et la borne de terre 225, forment conjointement un sous-ensemble du module électrique 120, qui se retrouve fonctionnellement, voir structurellement à l'identique dans chacun des modules électriques 220, 260 et 280. Bien entendu, au sein du dispositif de protection 200, un seul des trois sous-ensembles présents a son emplacement occupé par l'éclateur à gaz 224 et la borne de terre 225. Cette structuration modulaire permet de faciliter et de rendre économique l'industrialisation, ainsi que la maintenance ou le remplacement des dispositifs de protection 100 et 200.

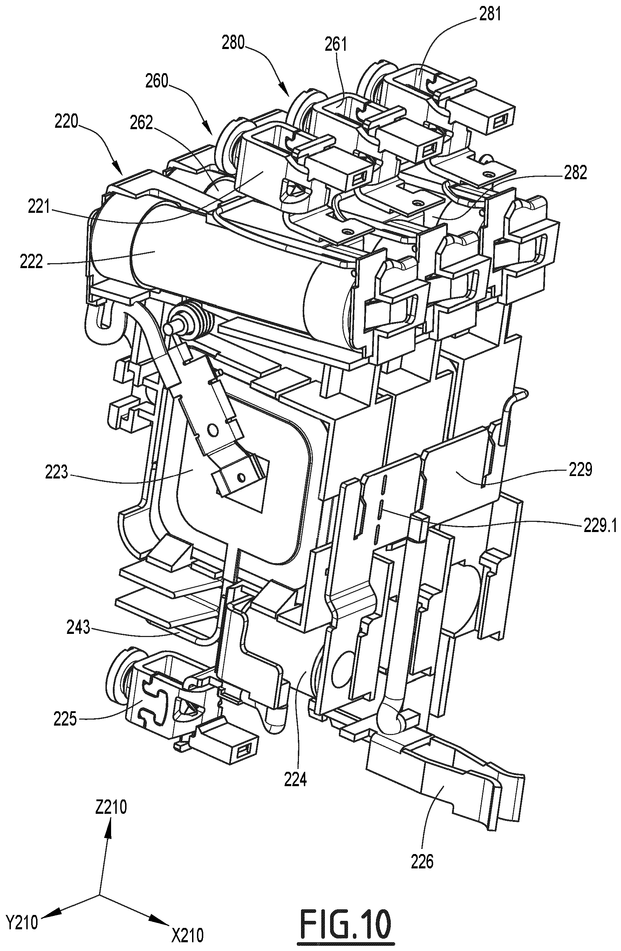

Egalement pour des raisons pratiques et économiques, les trois varistances 223, 263 et 283 du dispositif de protection 200 sont préférentiellement reliées à l'éclateur à gaz 224 par une plaquette conductrice 229, qui est fonctionnellement similaire à la plaquette conductrice 129 et qui est avantageusement commune aux trois modules électriques 120, 260 et 280, comme bien visible sur la figure 10. Suivant un aspect optionnel particulièrement astucieux, la plaquette conductrice 229 est conçue sécable, ici le long d'une ligne de coupe 229.1 visible à la figure 10, de manière à être utilisée indifféremment dans le dispositif de protection 200 lorsque la plaquette conductrice 229 est gardée entière et dans le dispositif de protection 100 lorsque la plaquette conductrice 229 est coupée pour n'en garder qu'un fragment qui correspond à la plaquette conductrice 129.

Par ailleurs, l'un des modules électriques 220, 260 et 280, ici le module électrique 260, comprend avantageusement une borne de neutre 266 qui est fonctionnellement, voire structurellement similaire à la borne de neutre 126. En particulier, la borne de neutre 266 est attenante à la seconde extrémité 216 du boitier 210 de sorte que, à l'état monté du dispositif de protection 200 sur le rail 16, le conducteur de neutre 18.2 est raccordé à la borne de neutre 266 au niveau de cette seconde extrémité 216, comme illustré schématiquement à la figure 7. De plus, la borne de neutre 266 est reliée à la borne de terre 225 par l'intermédiaire de l'éclateur à gaz 224 dans le volume interne V220. Ici, la borne de neutre 266 est avantageusement reliée à l'éclateur à gaz 224 par la plaquette conductrice 229.

Le dispositif de protection 200 comporte par ailleurs un dispositif électronique de supervision 240 qui est fonctionnellement similaire au dispositif électronique de supervision 140. En particulier, le dispositif électronique de supervision 240 comporte un circuit imprimé assemblé 241 qui est fonctionnellement similaire au circuit imprimé assemblé 141, en permettant ainsi de contrôler l'opérationnalité des trois modules électriques 220, 260 et 280 conjointement.

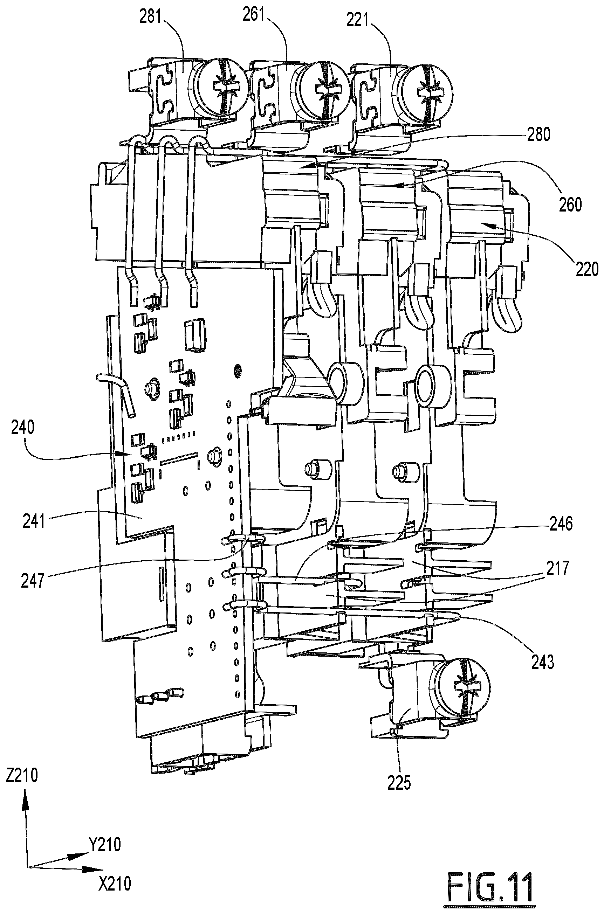

Suivant des considérations similaires à celles évoquées plus haut pour le circuit imprimé assemblé 141, le circuit imprimé assemblé 241 est avantageusement connecté aux bornes d'entrée respectives des trois varistances 223, 263 et 283 par des fils conducteurs respectifs 243, 246 et 247 du dispositif électronique de supervision 240. Ces fils conducteurs 243, 246 et 247 sont préférentiellement positionnés et maintenus à l'écart les uns des autres dans le volume interne V210 par des cloisons internes dédiés 217 du boitier 210, comme bien visible sur la figure 11. Les performances du dispositif électronique de supervision 240 sont ainsi préservées malgré la compacité du dispositif de protection 200.

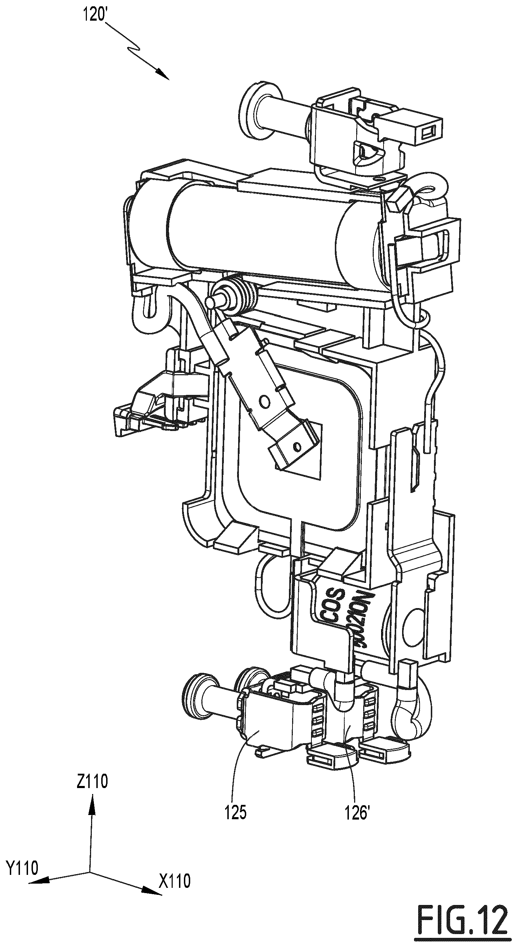

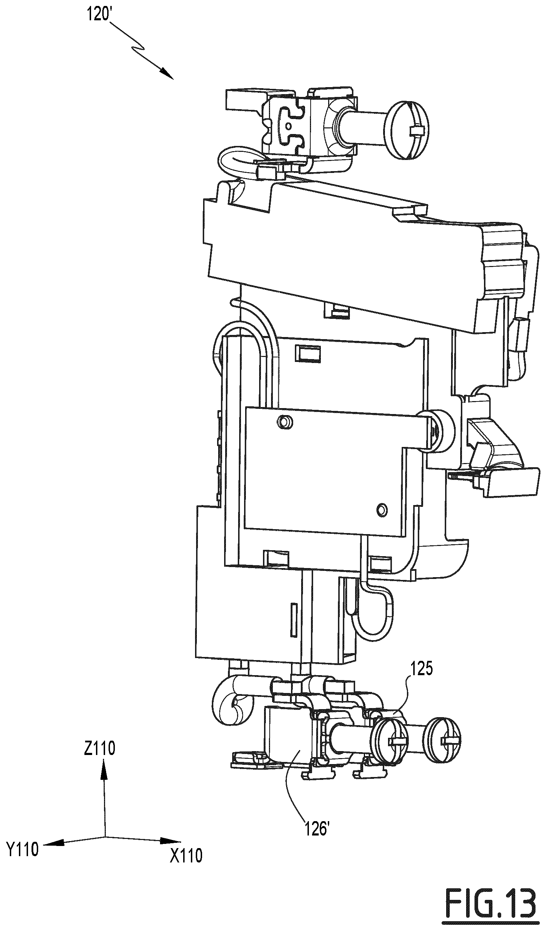

Sur les figures 12 et 13 est représentée une variante du dispositif de protection 100, qui se distingue de la forme de réalisation du dispositif de protection 100, montrée aux figures 2 à 6, par sa borne de neutre, référencée 126', appartenant à son module électrique, référencé 120'. En effet, dans la variante des figures 12 et 13, la borne de neutre 126' n'est pas une borne embrochable, comme la borne de neutre 126, mais une borne à vis, telle que celle évoquée plus haut pour les bornes de phase 121 et de terre 125, illustrées aux figures 2 à 6.

Ainsi, la variante des figures 12 et 13 illustre la multiplicité des formes de réalisation que peuvent prendre les bornes de phase et/ou de neutre du dispositif de protection 100. Bien entendu, des considérations identiques s'appliquent au dispositif de protection 200.

En pratique, selon la forme de réalisation des bornes de phase et de neutre, la forme de réalisation des conducteurs de phase et de neutre, auxquels ces bornes se raccordent à l'état monté des dispositifs de protection 100 et 200, est évidemment adaptée en conséquence. Ainsi, pour la variante du dispositif de protection 100 illustrée aux figures 12 et 13, le conducteur de neutre auquel la borne de neutre 126' est raccordable peut être filaire, en étant prévu pour relier la borne de neutre 126' à un terminal de bloc de neutre, situé à l'intérieur du tableau électrique 10 à distance du groupe des barres omnibus de phase 12, 13 et 14 ; dans ce cas, on comprend que le tableau électrique 10 peut alors être dépourvu des barres omnibus de neutre 17 et 18, au profit du terminal de bloc de neutre précité.

Enfin, divers aménagements et variantes aux dispositifs de protection 100 et 200, ainsi qu'à l'installation électrique 1, décrits jusqu'ici, sont par ailleurs envisageables. A titre d'exemples :
- dès lors que le dispositif de protection comprend une pluralité de modules électriques, telle que les trois modules électriques 220, 260 et 280 du dispositif de protection 200, le nombre des modules électriques de cette pluralité peut être différent de trois, la valeur de ce nombre étant, le cas échéant, égale au nombre de phases du courant alimentant l'installation électrique ; et/ou
- aussi bien pour les dispositifs de protection monophasés, tels que le dispositif de protection 100, que pour les dispositifs de protection polyphasés, tels que le dispositif de protection 200 triphasé, le dispositif de protection peut être dépourvu de borne de neutre, telle que les bornes de neutre 126, 126' et 266 ; dans ce cas, seule la borne de terre 125 ou 225 subsiste au niveau de la seconde extrémité 116 ou 216 du boitier correspondant 110 ou 210 ; une telle simplification du dispositif de protection est envisageable notamment lorsque le neutre de l'installation électrique est mis à la terre localement, c'est-à-dire au niveau du bâtiment, et ce par des moyens dédiés qui sont distincts du dispositif de protection et qui relient directement la terre et le neutre.

## Revendications

1. Dispositif de protection (100 ; 200) contre les surtensions, comportant :
- un boitier (110 ; 210), qui définit un axe de profondeur (X110 ; X210), un axe de largeur (Y110 ; Y210) et un axe de longueur (Z110 ; Z210), qui sont perpendiculaires entre eux, et qui inclut :
- une façade (111 ; 211) et un dos (112 ; 212), qui sont opposés l'un à l'autre suivant l'axe de profondeur, le dos étant adapté pour coopérer avec un rail (15) d'un tableau électrique (10) afin que le boitier soit supporté par le rail,
- deux flancs latéraux (113, 114 ; 213, 214), qui sont opposés l'un à l'autre suivant l'axe de largeur et qui sont reliés l'un à l'autre suivant l'axe de largeur par la façade et le dos du boitier, et
- des première et seconde extrémités (115, 116 ; 215, 216), qui sont opposées l'une à l'autre suivant l'axe de longueur et qui sont reliées l'une à l'autre suivant l'axe de longueur par la façade, le dos et les deux flancs latéraux du boitier, et
- un module électrique (120 ; 120') ou bien une pluralité de modules électriques (220, 260, 280), qui est agencé dans un volume interne (V110 ; V210) du boitier, délimité par conjointement la façade, le dos, les deux flancs latéraux et les première et seconde extrémités du boitier,
dans lequel le module électrique (120) ou bien chacun des modules électriques (220, 260, 280) de ladite pluralité comprend :
- une borne de phase (121 ; 221, 264, 281), qui est attenante à la première extrémité (115 ; 215) du boitier (110 ; 210) de sorte qu'un conducteur de phase (12.1 ; 12.1, 13.1, 14.1) du tableau électrique (10) est raccordable à la borne de phase au niveau de la première extrémité du boitier,
- un emplacement (E120 ; E220, E260, E280), qui est attenant à la seconde extrémité (116 ; 216) du boitier, et
- un fusible (122 ; 222, 262, 282) et une varistance (123 ; 223, 263, 283), qui sont reliés en série à la borne de phase dans le volume interne (V110 ; V210) du boitier et qui, suivant l'axe de longueur (Z110 ; Z210), sont répartis de manière que le fusible est disposé entre la borne de phase et la varistance et que la varistance est disposée entre le fusible et l'emplacement,
et dans lequel le module électrique (120 ; 120') ou bien l'un des modules électriques (220, 260, 280) de ladite pluralité comprend en outre un éclateur à gaz (124 ; 224) et une borne de terre (125 ; 225), qui sont :
- reliés en série à la varistance du module électrique ou bien aux varistances respectives des modules électriques de ladite pluralité dans le volume interne (V110 ; V210) du boitier (110 ; 210), et
- disposés dans l'emplacement (E120 ; E220, E260, E280) du module électrique considéré (120 ; 220) de sorte qu'un conducteur de protection (22 ; 23) du tableau électrique (10) est raccordable à la borne de terre au niveau de la seconde extrémité (116 ; 216) du boitier.

2. Dispositif de protection suivant la revendication 1, dans lequel le module électrique (120 ; 120') ou bien un des modules électriques (220, 260, 280) de ladite pluralité comprend en outre une borne de neutre (126 ; 126' ; 226) qui est :
- reliée à la borne de terre (125 ; 225) par l'intermédiaire de l'éclateur à gaz (124 ; 224) dans le volume interne (V110 ; V210) du boitier (110 ; 210), et
- attenante à la seconde extrémité (116 ; 216) du boitier de sorte qu'un conducteur de neutre (17.1 ; 18.2) du tableau électrique (10) est raccordable à la borne de neutre au niveau de la seconde extrémité du boitier.

3. Dispositif de protection suivant l'une des revendications 1 ou 2, dans lequel l'éclateur à gaz (124 ; 224) est relié à la varistance (123) du module électrique (120 ; 120') ou bien aux varistances respectives (223, 263, 283) des modules électriques (220, 260, 280) de ladite pluralité par une plaquette conductrice (129 ; 229) :
- qui est disposée dans le volume interne (V110 ; V210) du boitier (110 ; 210), en étant attenante au dos (112 ; 212) du boitier, et
- contre laquelle une borne de l'éclateur à gaz est appliquée suivant l'axe de profondeur (X110 ; X210).

4. Dispositif de protection suivant les revendications 2 et 3 prises ensemble, dans lequel la borne de neutre (126 ; 126' ; 226) est reliée à l'éclateur à gaz (124 ; 224) par la plaquette conductrice (129 ; 229).

5. Dispositif de protection suivant l'une quelconque des revendications précédentes,
dans lequel est prévu un seul module électrique (120 ; 120'), le dispositif de protection (100) étant monophasé,
et dans lequel les deux flancs latéraux (113, 114) du boitier (110) sont plans et parallèles, en étant écartés l'un de l'autre, suivant l'axe de largeur (Y110), de 18 mm.

6. Dispositif de protection suivant l'une quelconque des revendications 1 à 4,
dans lequel sont prévus trois modules électriques (220, 260, 280), le dispositif de protection (200) étant triphasé,
et dans lequel les deux flancs latéraux (213, 214) du boitier (210) sont plans et parallèles, en étant écartés l'un de l'autre, suivant l'axe de largeur (Y210), de 54 mm.

7. Dispositif de protection suivant l'une quelconque des revendications précédentes, dans lequel, pour le module électrique (120 ; 120') ou bien chacun des modules électriques (220, 260, 280) de ladite pluralité, le fusible (122 ; 222, 262, 282) présente une forme allongée qui s'étend en longueur depuis sensiblement la façade (111 ; 211) jusqu'à sensiblement le dos (112 ; 212) du boitier (110 ; 210).

8. Dispositif de protection suivant l'une quelconque des revendications précédentes,
dans lequel, pour le module électrique (120 ; 120') ou bien chacun des modules électriques (220, 260, 280) de ladite pluralité, le fusible (122 ; 222, 262, 282) et la varistance (123 ; 223, 263, 283) sont reliés l'un à l'autre par une liaison électrique (128) incluant deux contacts (128.1, 128.2) et une soudure (128.3) qui aboute les deux contacts lorsque la soudure est intègre tout en étant adaptée pour se rompre sous l'effet d'un échauffement de la varistance (123 ; 223, 263, 283),
et dans lequel l'un des deux contacts (128.1, 128.2) est porté par un bras (128.4), qui est maintenu fixe en position par la soudure (128.3) lorsque la soudure est intègre, et qui est entrainé par un ressort (128.5) dans le volume interne (V110 ; V210) du boitier (110 ; 210) lorsque la soudure est rompue de manière à écarter l'un de l'autre les deux contacts au moins suivant l'axe de largeur (Y110 ; Y210).

9. Dispositif de protection suivant l'une quelconque des revendications précédentes, dans lequel le dispositif de protection (100 ; 200) comporte en outre un dispositif électronique de supervision (140 ; 240), qui :
- inclut un circuit imprimé assemblé (141 ; 241) qui est configuré pour fournir une indication de fin de vie pour le module électrique (120 ; 120') ou bien pour les modules électriques (220, 260, 280) de ladite pluralité, et
- est agencé dans le volume interne (V110 ; V210) du boitier (110 ; 210) de manière que le circuit imprimé assemblé est attenant à l'un des flancs latéraux (113, 114 ; 213, 214) du boitier.

10. Dispositif de protection suivant la revendication 9,
dans lequel le dispositif électronique de supervision (240) est connecté aux varistances respectives (223, 263, 283) des modules électriques (220, 260, 280) de ladite pluralité par des fils conducteurs respectifs (243, 246, 247),
et dans lequel le boitier (210) inclut des cloisons internes (217) qui positionnent et maintiennent à l'écart les uns des autres les fils conducteurs dans le volume interne (V210) du boitier.

11. Installation électrique (1), comportant :
- un tableau électrique (10) qui comprend :
- des barres omnibus de phase (12, 13, 14), qui sont destinées à être respectivement alimentées par une phase d'une tension d'une alimentation électrique et qui s'étendent en longueur parallèlement les unes aux autres, en étant disposées côte à côte de manière à former un groupe dans une zone intermédiaire du tableau électrique,
- deux rails (14, 15), qui sont chacun adaptés pour supporter des appareillages électriques (50, 100, 200) et qui s'étendent chacun en longueur parallèlement aux barres omnibus de phase, les deux rails étant disposés le long et de part et d'autre du groupe, et
- une barrette de terre (20) qui est destinée à être reliée à la terre, et
- le dispositif de protection (100 ; 200) conforme à l'une quelconque des revendications précédentes,
dans laquelle le boitier (110 ; 210) est monté sur un des deux rails (15, 16) de sorte que la première extrémité (115 ; 215) du boitier est tournée vers le groupe des barres omnibus de phase (12, 13, 14) suivant l'axe de longueur (Z110 ; Z210),
dans laquelle la borne de phase (121 ; 221, 264, 281) du module électrique (120 ; 120') ou de chacun des modules électriques (220, 260, 280) de ladite pluralité est reliée à l'une des barres omnibus de phase (12, 13, 14) par un conducteur de phase (12.1 ; 12.1, 13.1, 14.1), qui s'étend depuis et transversalement à la barre omnibus de phase considérée et qui est raccordé à la borne de phase (121 ; 221, 261, 281) du module électrique considéré au niveau de la première extrémité (115 ; 215) du boitier (110 ; 210),
et dans laquelle la borne de terre (125 ; 225) est reliée à la barrette de terre (20) par un conducteur de protection (22, 23), qui est filaire et dont une extrémité est raccordée à la borne de terre (125 ; 225) au niveau de la deuxième extrémité (116 ; 216) du boitier (110 ; 210).

12. Installation électrique suivant la revendication 11,
dans laquelle le dispositif de protection (100 ; 200) est conforme à la revendication 2,
et dans laquelle un conducteur de neutre (17.1 ; 18.2) est raccordé à la borne de neutre (126 ; 226) au niveau de la seconde extrémité du boitier (110 ; 210).

13. Installation électrique suivant la revendication 12,
dans laquelle le tableau électrique (10) comprend en outre, pour au moins un des deux rails (15, 16), une barre omnibus de neutre (17, 18), qui est destinée à être alimentée par un neutre de l'alimentation électrique et qui s'étend en longueur parallèlement et à distance des barres omnibus de phase (12, 13, 14), ledit au moins un des deux rails étant interposé entre la barre omnibus de neutre et le groupe des barres omnibus de phase,
et dans laquelle la borne de neutre (126 ; 126' ; 226) est reliée à la barre omnibus de neutre (17, 18) par le conducteur de neutre (17.1 ; 18.2) qui s'étend depuis et transversalement à la barre omnibus de neutre.

## Patentansprüche

1. Schutzvorrichtung (100; 200) gegen Überspannungen, umfassend:
- ein Gehäuse (110; 210), das eine Tiefenachse (X110; X210), eine Breitenachse (Y110; Y210) und eine Längenachse (Z110; Z210) definiert, die senkrecht zueinander sind, und das Folgendes beinhaltet:
- eine Vorderseite (111; 211) und eine Rückseite (112; 212), die einander entlang der Tiefenachse gegenüber sind, wobei die Rückseite angepasst ist, um mit einer Schiene (15) einer elektrischen Schalttafel (10) zusammenzuwirken, damit das Gehäuse von der Schiene getragen wird,
- zwei Seitenflanken (113, 114; 213, 214), die einander entlang der Breitenachse gegenüber sind und die entlang der Breitenachse durch die Vorderseite und die Rückseite des Gehäuses miteinander verbunden sind, und
- ein erstes und ein zweites Ende (115, 116; 215, 216), die einander entlang der Längsachse gegenüber sind und die entlang der Längsachse durch die Vorderseite, die Rückseite und die zwei Seitenflanken des Gehäuses miteinander verbunden sind, und
- ein elektrisches Modul (120; 120') oder aber eine Vielzahl elektrischer Module (220, 260, 280), die in einem Innenvolumen (V110; V210) des Gehäuses angeordnet sind, das gemeinsam durch die Vorderseite, die Rückseite, die zwei Seitenflanken und das erste und das zweite Ende des Gehäuses begrenzt ist,
wobei das elektrische Modul (120) oder aber jedes der elektrischen Module (220, 260, 280) der Vielzahl Folgendes umfasst:
- ein Phasenanschluss (121 ; 221, 264, 281), der an das erste Ende (115 ; 215) des Gehäuses (110 ; 210) angrenzt, sodass ein Phasenleiter (12.1 ; 12.1, 13.1, 14.1) der elektrischen Schalttafel (10) an den Phasenanschluss an dem ersten Ende des Gehäuses anschließbar ist,
- eine Einbaustelle (E120 ; E220, E260, E280), die angrenzend an das zweite Ende (116 ; 216) des Gehäuses ist, und
- eine Sicherung (122 ; 222, 262, 282) und einen Varistor (123 ; 223, 263, 283), die in dem Innenvolumen (V110; V210) des Gehäuses mit dem Phasenanschluss in Reihe verbunden sind und die entlang der Längsachse (Z110 ; Z210) verteilt sind, sodass die Sicherung zwischen dem Phasenanschluss und dem Varistor und der Varistor zwischen der Sicherung und der Einbaustelle angeordnet ist,
und wobei das elektrische Modul (120; 120') oder aber eines der elektrischen Module (220, 260, 280) der Vielzahl ferner einen Gasentlader (124; 224) und einen Erdungsanschluss (125; 225) umfasst, die:
- in Reihe mit dem Varistor des elektrischen Moduls oder aber mit den jeweiligen Varistoren der elektrischen Module der Vielzahl in dem Innenvolumen (V110; V210) des Gehäuses (110; 210) verbunden sind, und
- an der Einbaustelle (E120 ; E220, E260, E280) des betreffenden elektrischen Moduls (120 ; 220) angeordnet sind, sodass ein Schutzleiter (22 ; 23) der Schalttafel (10) an den Erdungsanschluss an dem zweiten Ende (116 ; 216) des Gehäuses anschließbar ist.

2. Schutzvorrichtung nach Anspruch 1, wobei das elektrische Modul (120; 120') oder aber eines der elektrischen Module (220, 260, 280) der Vielzahl ferner einen Nullleiteranschluss (126; 126'; 226) umfasst, der:
- mit dem Erdungsanschluss (125; 225) über den Gasentlader (124; 224) in dem Innenvolumen (V110 ; V210) des Gehäuses (110; 210) verbunden ist, und
- angrenzend an das zweite Ende (116; 216) des Gehäuses ist, sodass ein Nullleiter (17.1; 18.2) der elektrischen Schalttafel (10) an den Nullleiteranschluss an dem zweiten Ende des Gehäuses anschließbar ist.

3. Schutzvorrichtung nach einem der Ansprüche 1 oder 2, wobei der Gasentlader (124 ; 224) über ein Leiterplättchen (129 ; 229) mit dem Varistor (123) des elektrischen Moduls (120 ; 120') oder aber den jeweiligen Varistoren (223, 263, 283) der elektrischen Module (220, 260, 280) der Vielzahl verbunden ist:
- das in dem Innenvolumen (V110 ; V210) des Gehäuses (110 ; 210) angeordnet ist, wobei es an die Rückseite (112 ; 212) des Gehäuses angrenzt, und
- an dem ein Anschluss des Gasentladers entlang der Tiefenachse (X110; X210) anliegt.

4. Schutzvorrichtung nach den Ansprüchen 2 und 3 zusammengenommen, wobei der Nullleiteranschluss (126 ; 126' ; 226) über das Leiterplättchen (129 ; 229) mit dem Gasentlader (124 ; 224) verbunden ist.

5. Schutzvorrichtung nach einem der vorherigen Ansprüche,
wobei ein einzelnes elektrisches Modul (120; 120') bereitgestellt ist, die Schutzvorrichtung (100) einphasig ist,
und wobei die zwei Seitenflanken (113, 114) des Gehäuses (110) eben und parallel sind und entlang der Breitenachse (Y110) um 18 mm voneinander beabstandet sind.

6. Schutzvorrichtung nach einem der Ansprüche 1 bis 4,
wobei drei elektrische Module (220, 260, 280) bereitgestellt sind, die Schutzvorrichtung (200) dreiphasig ist,
und wobei die zwei Seitenflanken (213, 214) des Gehäuses (210) eben, parallel und entlang der Breitenachse (Y210) um 54 mm voneinander beabstandet sind.

7. Schutzvorrichtung nach einem der vorherigen Ansprüche, wobei für das elektrische Modul (120; 120') oder aber jedes der elektrischen Module (220, 260, 280) der Vielzahl die Sicherung (122; 222, 262, 282) eine längliche Form aufweist, die sich in der Länge von im Wesentlichen der Vorderseite (111; 211) bis im Wesentlichen zu der Rückseite (112; 212) des Gehäuses (110; 210) erstreckt.

8. Schutzvorrichtung nach einem der vorherigen Ansprüche,
wobei für das elektrische Modul (120; 120') oder aber jedes der elektrischen Module (220, 260, 280) der Vielzahl die Sicherung (122; 222, 262, 282) und der Varistor (123; 223, 263, 283) durch eine elektrische Verbindung (128) miteinander verbunden sind, die zwei Kontakte (128.1, 128.2) und eine Lötstelle (128.3) beinhaltet, die die zwei Kontakte verbindet, wenn sie intakt ist, dabei aber angepasst ist, um bei einer Erhitzung des Varistors (123; 223, 263, 283) zu brechen,
und wobei einer der zwei Kontakte (128.1, 128.2) von einem Arm (128.4) getragen wird, der durch die Lötstelle (128.3) fixiert an seiner Position gehalten wird, wenn die Lötstelle intakt ist, und der durch eine Feder (128.5) in das Innenvolumen (V110; V210) des Gehäuses (110; 210) getrieben wird, wenn die Lötstelle gebrochen ist, um die zwei Kontakte zumindest entlang der Breitenachse (Y110; Y210) voneinander zu entfernen.

9. Schutzvorrichtung nach einem der vorherigen Ansprüche, wobei die Schutzvorrichtung (100; 200) ferner eine elektronische Überwachungsvorrichtung (140; 240) umfasst, die:
- eine bestückte Leiterplatte (141 ; 241) beinhaltet, die konfiguriert ist, um eine Angabe des betrieblichen Lebensendes für das elektrische Modul (120 ; 120') oder aber die elektrischen Module (220, 260, 280) der Vielzahl bereitzustellen, und
- in dem Innenvolumen (V110; V210) des Gehäuses (110; 210) angeordnet ist, sodass die bestückte Leiterplatte an eine der Seitenflanken (113, 114; 213, 214) des Gehäuses angrenzt.

10. Schutzvorrichtung nach Anspruch 9,
wobei die elektronische Überwachungsvorrichtung (240) mit den jeweiligen Varistoren (223, 263, 283) der elektrischen Module (220, 260, 280) der Vielzahl durch jeweilige Leiterdrähte (243, 246, 247) verbunden ist,
und wobei das Gehäuse (210) innere Trennwände (217) beinhaltet, die die Leiterdrähte in dem Innenvolumen (V210) des Gehäuses positionieren und voneinander beabstandet halten.

11. Elektrische Anlage (1), umfassend:
- eine elektrische Schalttafel (10), die Folgendes umfasst:
- Phasensammelschienen (12, 13, 14), die dazu bestimmt sind, jeweils von einer Phase einer Spannung einer Stromversorgung versorgt zu werden, und die sich in der Länge parallel zueinander erstrecken, wobei sie nebeneinander angeordnet sind, um eine Gruppe in einem Zwischenbereich der Schalttafel zu bilden,
- zwei Schienen (14, 15), die jeweils zum Tragen von elektrischen Geräten (50, 100, 200) geeignet sind und die sich in Längsrichtung parallel zu den Phasensammelschienen erstrecken, wobei die zwei Schienen entlang und auf beiden Seiten der Gruppe angeordnet sind, und
- eine Erdungsleiste (20), die dazu bestimmt ist, mit der Erde verbunden zu werden, und
- die Schutzvorrichtung (100; 200) nach einem der vorherigen Ansprüche,
wobei das Gehäuse (110; 210) an einer der beiden Schienen (15, 16) montiert ist, sodass das erste Ende (115; 215) des Gehäuses der Gruppe der Phasensammelschienen (12, 13, 14) entlang der Längsachse (Z110; Z210) zugewandt ist,
wobei der Phasenanschluss (121; 221, 264, 281) des elektrischen Moduls (120; 120') oder aber jedes der elektrischen Module (220, 260, 280) dieser Vielzahl durch einen Phasenleiter (12.1; 12.1, 13.1, 14.1) mit einer der Phasensammelschienen (12, 13, 14) verbunden ist, der sich von der betreffenden Phasensammelschiene quer erstreckt und an dem ersten Ende (115; 215) des Gehäuses (110; 210) mit dem Phasenanschluss (121; 221, 261, 281) des betreffenden elektrischen Moduls verbunden ist,
und wobei der Erdungsanschluss durch einen Schutzleiter (22, 23) (125; 225) mit der Erdungsleiste (20) verbunden ist, der drahtförmig ausgeführt ist und dessen eine Ende an dem zweiten Ende (116; 216) des Gehäuses (110; 210) an den Erdungsanschluss (125; 225) angeschlossen ist.

12. Elektrische Anlage nach Anspruch 11,
wobei die Schutzvorrichtung (100; 200) Anspruch 2 entspricht,
und wobei ein Nullleiter (17.1 ; 18.2) an dem Nullleiteranschluss (126 ; 226) an dem zweiten Ende des Gehäuses (110 ; 210) angeschlossen ist.

13. Elektrische Anlage nach Anspruch 12,
wobei die elektrische Schalttafel (10) ferner für mindestens eine der zwei Schienen (15, 16) eine Nullleitersammelschiene (17, 18) umfasst, die dazu bestimmt ist, von einem Nullleiter der Stromversorgung versorgt zu werden, und die sich in Längsrichtung parallel zu den Phasensammelschienen (12, 13, 14) und in einem Abstand davon erstreckt, wobei mindestens eine der zwei Schienen zwischen der Nullleitersammelschiene und der Gruppe von Phasensammelschienen angeordnet ist,
und wobei der Nullleiteranschluss (126; 126'; 226) durch den Nullleiter (17.1; 18.2), der sich von und quer zu der Nullleiter-Sammelschiene erstreckt, mit der Nullleitersammelschiene (17, 18) verbunden ist.

## Claims

1. An overvoltage protection device (100; 200) comprising:
- a housing (110; 210), which defines a depth axis (X110; X210), a width axis (Y110; Y210) and a length axis (Z110; Z210), which are perpendicular to each other, and which includes:
- a front (111; 211) and a back (112; 212), which are opposite each other along the depth axis, the back being adapted to cooperate with a rail (15) of an electrical panel (10) so that the housing is supported by the rail,
- two lateral sides (113, 114; 213, 214), which are opposite each other along the width axis and which are connected to each other along the width axis by the front and back of the housing, and
- first and second ends (115, 116 ; 215, 216), opposite each other along the length axis and joined by the front, the back, and the two lateral sides of the housing, and
- an electrical module (120; 120') or a plurality of electrical modules (220, 260, 280), which is arranged within an internal volume (V110; V210) of the housing, jointly delimited by the front, the back, the two lateral sides and the first and second ends of the housing,
wherein the electrical module (120) or each of the electrical modules (220, 260, 280) of said plurality comprises:
- a phase terminal (121; 221, 264, 281), which adjoins the first end (115; 215) of the housing (110; 210) so that a phase conductor (12.1; 12.1, 13.1, 14.1) of the electrical panel (10) can be connected to the phase terminal at the first end of the housing,
- a location (E120; E220, E260, E280), which adjoins the second end (116; 216) of the housing, and
- a fuse (122; 222, 262, 282) and a varistor (123; 223, 263, 283), which are connected in series to the phase terminal within the internal volume (V110; V210) of the housing and which, along the length axis (Z110; Z210), are distributed in such a way that the fuse is arranged between the phase terminal and the varistor and so that the varistor is arranged between the fuse and the location,
and wherein the electrical module (120; 120') or one of the electrical modules (220, 260, 280) of said plurality further comprises a gas discharge tube (124; 224) and an earth terminal (125; 225), which are:
- connected in series to the varistor of the electrical module or to the respective varistors of the electrical modules of said plurality within the internal volume (V110; V210) of the housing (110; 210), and
- arranged in the location (E120; E220, E260, E280) of the relevant electrical module (120; 220) so that a protective conductor (22; 23) of the electrical panel (10) can be connected to the earth terminal at the second end (116; 216) of the housing.

2. The protection device according to claim 1, wherein the electrical module (120; 120') or one of the electrical modules (220, 260, 280) of said plurality further comprises a neutral terminal (126; 126'; 226) which is:
- connected to the earth terminal (125; 225) via the gas discharge tube (124; 224) within the internal volume (V110; V210) of the housing (110; 210), and
- adjoining the second end (116; 216) of the housing so that a neutral conductor (17.1; 18.2) of the electrical panel (10) can be connected to the neutral terminal at the second end of the housing.

3. The protection device according to one of claims 1 or 2, wherein the gas discharge tube (124; 224) is connected to the varistor (123) of the electrical module (120; 120') or to the respective varistors (223, 263, 283) of the electrical modules (220, 260, 280) of said plurality by a conductive plate (129; 229):
- which is arranged within the internal volume (V110; V210) of the housing (110; 210), adjoining the back (112; 212) of the housing, and
- against which a terminal of the gas discharge tube is placed along the depth axis (X110; X210).

4. The protection device according to claims 2 and 3 taken together, wherein the neutral terminal (126; 126'; 226) is connected to the gas discharge tube (124; 224) by the conductive plate (129; 229).

5. The protection device according to any one of the preceding claims,
wherein a single electrical module (120; 120') is provided, the protection device (100) being single-phase,
and wherein the two lateral sides (113, 114) of the housing (110) are flat and parallel, being 18 mm apart along the width axis (Y110).

6. The protection device according to any one of claims 1 to 4,
wherein three electrical modules (220, 260, 280) are provided, the protection device (200) being three-phase,
and wherein the two lateral sides (213, 214) of the housing (210) are flat and parallel, being 54 mm apart along the width axis (Y210).

7. The protection device according to any one of the preceding claims, wherein, for the electrical module (120; 120') or each of the electrical modules (220, 260, 280) of said plurality, the fuse (122; 222, 262, 282) has an elongated shape which extends lengthwise from substantially the front (111; 211) to substantially the back (112; 212) of the housing (110; 210).

8. The protection device according to any one of the preceding claims,
wherein, for the electrical module (120; 120') or for each of the electrical modules (220, 260, 280) of said plurality, the fuse (122; 222, 262, 282) and the varistor (123; 223, 263, 283) are connected to each other by an electrical link (128) including two contacts (128.1, 128.2) and a solder (128.3) which joins the two contacts when intact and is adapted to break when the varistor (123; 223, 263, 283) heats up,
and wherein one of the two contacts (128.1, 128.2) is carried by an arm (128.4), which is held fixed in position by the solder (128.3) when the solder is intact, and which is driven by a spring (128.5) into the internal volume (V110 ; V210) of the housing (110; 210) when the solder is broken so as to separate the two contacts from each other, at least along the width axis (Y110 ; Y210).

9. The protection device according to any one of the preceding claims, wherein the protection device (100; 200) further comprises an electronic supervision device (140; 240), which:
- includes an assembled circuit board (141; 241) which is configured to provide an end-of-life indication for the electrical module (120; 120') or for the electrical modules (220, 260, 280) of said plurality, and
- is arranged within the internal volume (V110 ; V210) of the housing (110 ; 210) so that the assembled printed circuit board adjoins one of the lateral sides (113, 114 ; 213, 214) of the housing.

10. The protection device according to claim 9,
wherein the electronic supervision device (240) is connected to the respective varistors (223, 263, 283) of the electrical modules (220, 260, 280) of said plurality by respective conductive wires (243, 246, 247),
and wherein the housing (210) includes internal partitions (217) which position and keep apart the conductive wires within the internal volume (V210) of the housing.

11. An electrical installation (1) comprising:
- an electrical panel (10) which comprises:
- phase busbars (12, 13, 14), each intended to be supplied by a phase of the power-supply voltage, which extend lengthwise, parallel to one another, and are arranged side by side so as to form a group in an intermediate region of the electrical panel,
- two rails (14, 15), each of which is adapted to support electrical equipment (50, 100, 200) and each of which extends lengthwise parallel to the phase busbars, the two rails being arranged along and on either side of the group, and
- an earthing strip (20) which is intended to be connected to earth, and
- the protection device (100; 200) according to any one of the preceding claims,
wherein the housing (110; 210) is mounted on one of the two rails (15, 16) so that the first end (115; 215) of the housing faces the group of phase busbars (12, 13, 14) along the length axis (Z110; Z210),
wherein the phase terminal (121; 221, 264, 281) of the electrical module (120; 120') or of each of the electrical modules (220, 260, 280) of said plurality is connected to one of the phase busbars (12, 13, 14) by a phase conductor (12.1; 12.1, 13.1, 14.1), which extends from and transversely across the given phase busbar and is connected to the phase terminal (121; 221, 261, 281) of the given electrical module at the first end (115; 215) of the housing (110; 210),
and wherein the earth terminal (125 ; 225) is connected to the earthing strip (20) by a protective conductor (22, 23), which is in wire form, and one end of which is connected to the earth terminal (125; 225) at the second end (116; 216) of the housing (110; 210).

12. The electrical installation according to claim 11,
wherein the protection device (100; 200) is according to claim 2,
and wherein a neutral conductor (17.1; 18.2) is connected to the neutral terminal (126; 226) at the second end of the housing (110; 210).

13. The electrical installation according to claim 12,
wherein the electrical panel (10) further comprises, for at least one of the two rails (15, 16), a neutral busbar (17, 18), which is intended to be supplied by a neutral of the power supply and which extends lengthwise parallel to and at a distance from the phase busbars (12, 13, 14), said at least one of the two rails being interposed between the neutral busbar and the group of phase busbars,
and wherein the neutral terminal (126; 126' ; 226) is connected to the neutral busbar (17, 18) by the neutral conductor (17.1; 18.2) which extends from and transversely across the neutral busbar.
